# EUROPEAN PATENT SPECIFICATION

(11) **EP 4 535 810 B1**
(45) Date of publication and mention of the grant of the patent: **15.07.2026**
(21) Application number: 23925031.9
(22) Date of filing: 28.11.2023
(51) Int. Cl.: H04N 23/60, H04N 23/63, H04N 23/62, H04N 23/667

(54) **IMAGE SNAPSHOT METHOD, ELECTRONIC DEVICE, AND STORAGE MEDIUM**
BILDSCHNAPPSCHUSSVERFAHREN, ELEKTRONISCHE VORRICHTUNG UND SPEICHERMEDIUM
PROCÉDÉ D'INSTANTANÉ D'IMAGE, DISPOSITIF ÉLECTRONIQUE, ET SUPPORT DE STOCKAGE

(30) Priority: 27.02.2023 CN 202310212397
(43) Date of publication of application: 09.04.2025
(73) Proprietor: Honor Device Co., Ltd., Shenzhen, Guangdong 518040 (CN)
(72) Inventor: HOU, Weilong, Shenzhen, Guangdong 518040 (CN); ZHANG, Zuochao, Shenzhen, Guangdong 518040 (CN); DONG, Zhen, Shenzhen, Guangdong 518040 (CN); ZHANG, Jian, Shenzhen, Guangdong 518040 (CN); ZHANG, Dong, Shenzhen, Guangdong 518040 (CN)
(74) Representative: Goddar, Heinz J.
(86) International application number: PCT/CN2023/134783
(87) International publication number: WO 2024/179083

(56) References cited:
- CN-A- 106 210 496
- CN-A- 107 302 666
- CN-A- 115 002 340
- CN-A- 115 525 188
- CN-A- 115 567 633
- US-A1- 2022 038 621
- US-A1- 2024 276 055
- US-A1- 2024 373 119
- US-B1- 9 807 301

## Description

This application claims priority to Chinese Patent Application No. 202310212397.X, filed with the China National Intellectual Property Administration on February 27, 2023 and entitled "IMAGE CAPTURE METHOD, ELECTRONIC DEVICE, AND STORAGE MEDIUM".

### TECHNICAL FIELD

This application relates to the field of image processing technologies, and in particular, to an image capture method, an electronic device, and a storage medium.

### BACKGROUND

Electronic devices such as a mobile phone may be used to take photos and videos. When a user expects to "capture" a highlight by using a mobile phone, the user triggers photographing by tapping an image shooting button. However, because of a response delay and an action delay, a photo finally obtained by the user through photographing may not be an ideal photo at a specific moment.

Currently, a possible manner of obtaining a photo of the highlight is as follows: The user selects to shoot a video first, and then saves a specific frame of image as a photo by performing a screen-shot operation on the video. In this case, an operation of obtaining the photo by the user is cumbersome, which affects use experience of the user. In addition, image quality of the photo obtained by extracting an image frame from the video is very low, which also reduces use experience of the user.

CN 115525188 A discloses a shooting method. The method can be applied to terminal equipment with shooting capability, such as mobile phones and network televisions. By implementing the method, the terminal equipment can perform image recognition and analysis on the video frame in the video shooting process, determine the wonderful video frame and generate the wonderful picture. Thus, the user can obtain the video and the wonderful picture in the video at the same time in the video shooting process, the problem that the wonderful picture is difficult to shoot through manual snapshot or the problem that the picture quality of the wonderful picture captured through the shot video is low is avoided, user operation is saved, and the user experience is improved.

US 9,807,301 B1 discloses a "Moment Capture System" that automatically captures and buffers multiple image frames, both prior to and following digital camera shutter activation. This capture and buffering is performed in combination with real-time automatic control of camera settings (e.g., exposure time, capture rate, ISO, white balance, aperture, etc.) based on an ongoing real-time evaluation of contents and characteristics of most recent previously buffered frames. Whenever a shutter activation (e.g., a "tap") is detected, the Moment Capture System pulls some number of pretap frames from the buffer and adds some number of post-tap frames to create an "image moment." Image moments are defined as sets of sequential frames spanning a time period before and after the detected tap. In various implementations, the Moment Capture System performs automated selection of perceptually best images from the buffered frames associated with each tap. This automated selection closely emulates human selection based on subjective subtleties of human preferences.

CN 115002340 A discloses a video processing method and electronic equipment. The method comprises the steps of recording a first video in response to a first operation of a user; a first interface is displayed, the first interface is a playing interface of the first video, the first interface comprises a first control and a first area, the first area displays a thumbnail of a first photo and a thumbnail of a second photo, the first photo is automatically shot at a first moment, and the second photo is automatically shot at a second moment; the recording process of the first video comprises a first moment and a second moment; in response to a second operation on the first control, a second interface is displayed, the second interface is a playing interface of a second video, the duration of the second video is smaller than that of the first video, and the second video at least comprises the first photo. After the recording of the first video is completed, the user can check the wonderful moment picture and the selected short video of the first video in the picture library. According to the video processing method provided by the embodiment of the disclosure, the obtained image at the wonderful moment is higher in quality, and the user experience is better.

### SUMMARY

This application provides an image capture method and an electronic device. In a capture scene, regardless of whether a reaction moment during photographing is delayed or advanced, an optimal image frame in a photographing process can be captured, and a best moment can be recorded, to meet a user requirement to the greatest extent.

To achieve the foregoing objective, this application uses the following technical solutions.

According to a first aspect, this application provides an image capture method. The method includes:
displaying a preview interface of a photo mode of a camera in the photo mode, where a first icon is displayed in the preview interface, and the first icon is in a first state;
in response to an operation of a user on the first icon, enabling a first function, and switching the first icon from the first state to a second state; and
performing the following steps in response to an operation of the user on an image shooting button at a first moment:
determining a first image in a plurality of frames of images in a first time period before the first moment and a plurality of frames of images in a second time period after the first moment;
generating a first photo based on the first image; and
saving the first photo into a gallery; and
where the photo mode further includes a second function, a switch button of the second function is displayed on a setting interface of the photo mode, and the switch button of the second function is set to an off state by default. When the switch button of the second function is in the off state, the second function is in an off state; and
the method further includes: when the second function is enabled, continuously collecting preview images to obtain a second preview image frame stream; identifying, based on the second preview image frame stream, that a current shooting scene is a first scene; performing frame-by-frame comparison on each frame of preview image in the second preview image frame stream, to determine a fourth image with a highest comprehensive score; when identifying, based on the second preview image frame stream, that the current shooting scene changes to a second scene, generating a second photo based on the fourth image; and saving the second photo into the gallery, to complete an auto capture.

According to the image capture method provided in this embodiment of this application, after the first function is enabled and when the user triggers photographing, an electronic device selects a frame of image from a plurality of frames of images in a time period from a moment before photographing to a moment after photographing, and uses the image as a highlights capture photo. For example, after the user taps the image shooting button (a shutter), a frame of image is selected from a plurality of image frames collected within 1 second in a historical direction before photographing and a plurality of image frames collected within 0.5 seconds in a future direction after photographing, and the image is used as a highlights capture photo. The finally output highlights capture photo is a frame of image selected in a time period before and after photographing, for example, an image frame that meets a user requirement and that is obtained through screening using a specific condition. Therefore, in this solution of this application, in a capture scene, regardless of whether a reaction moment during photographing is delayed or advanced, an optimal image frame in a photographing process can be captured, and a best moment can be recorded, to meet the user requirement to the greatest extent.

It should be noted that, during actual implementation, the first function may be referred to as a manual capture function or a highlights capture function, and may be specifically determined based on an actual use requirement. This is not limited in this embodiment of this application.

It should be further noted that, the plurality of frames of images in the first time period before the first moment and the plurality of frames of images in the second time period after the first moment may include a frame of image at the first moment.

It should be noted that, during actual implementation, the second function may be referred to as an auto capture function, and may be specifically determined based on an actual use requirement. This is not limited in this embodiment of this application.

According to the method, when the second function is enabled, in a preview process, preview images are collected, frame-by-frame comparison is performed to select an optimal frame, and the optimal frame is cached. Once a scene change occurs, photographing is automatically triggered, to obtain an auto capture photo. The finally output auto capture photo is an optimal frame in a time period before a transition. Therefore, in this solution of this application, an optimal image frame in the current scene can be automatically captured, and a best moment can be recorded, to meet a user requirement to the greatest extent.

The image capture method provided in this embodiment of this application includes two manners: auto capture and manual capture.

For manual capture, an AI algorithm is added to help frame selection in the time period before and after photographing by the user, to implement a frame selection solution at an AI semantic level and help the user capture a moment more easily in some typical capture scenes. For example, after the user taps the image shooting button (the shutter), an optimal frame is selected from a plurality of image frames within 1 second in a historical direction of photographing and within 0.5 seconds in a future direction of photographing, and the optimal frame is used as a highlights capture photo.

For auto capture, in a predefined scene, image content is sensed by using an AI algorithm and a photo is automatically captured. For example, in a preview process, preview images are collected, frame-by-frame comparison is performed to select an optimal frame, and the optimal frame is cached. Once a scene change occurs, photographing is automatically triggered, to obtain an auto capture photo.

In some possible implementations, the first image is an image with a highest comprehensive score among the plurality of frames of images in the first time period before the first moment and the plurality of frames of images in the second time period after the first moment. The comprehensive score includes an image quality score, a portrait score, and an action score.

In some possible implementations, after the enabling a first function, the method further includes: continuously collecting preview images to obtain a first preview image frame stream; and determining a local optimal image for every M frames of preview images in the first preview image frame stream, and sequentially inputting each determined local optimal image into a first cache queue, where the local optimal image is an image with a highest comprehensive score in the M frames of preview images.

The first cache queue is a first-in first-out queue, the first cache queue caches S frames of recently determined local optimal images and N frames of recently collected images, and N is less than or equal to M.

A total quantity of frames of the plurality of frames of images in the first time period is S×M+N.

In some possible implementations, the first time period is 1 second. For example, it is assumed that a frame rate is 30 frames per second, the total quantity of frames of the plurality of frames of images in the first time period is 30, S is 2, and both M and N are 10.

In some possible implementations, the first time period is less than 1 second. For example, it is assumed that a frame rate is 30 frames per second, the total quantity of frames of the plurality of frames of images in the first time period is less than 30, S is 2, M is 10, and N is a positive integer less than 10.

In this solution of this application, if all content in the 1 second is cached, the electronic device needs to cache at least 1s×30 fps=30 frames of images. In this application, local optima are evaluated, and local optimal frames of recently collected images and the N frames of recently collected images are cached. Therefore, only a small quantity of frames need to be dynamically cached. For example, in this application, only a maximum of 1+1+10=12 frames needs to be cached, to implement backtracking in the historical direction. If a plurality of frames need to be combined for photographing, only a maximum of 4+4+10=18 frames needs to be cached. Therefore, in this solution of this application, internal storage can be greatly saved, and power consumption can be reduced.

In this solution of this application, after the first function is enabled, the electronic device continuously and automatically collects a plurality of frames of images and analyzes a local optimal frame in the images. After the user triggers photographing, the electronic device continues to collect a plurality of frames of images and analyzes a local optimal frame in the images. Then, the electronic device determines one optimal frame in the local optimal frame determined before photographing and the local optimal frame determined after photographing, and uses the optimal frame as a highlights capture photo. The finally output highlights capture photo is the optimal frame in a time period before and after photographing. Therefore, in this solution of this application, in a capture scene, regardless of whether a reaction moment during photographing is delayed or advanced, an optimal image frame in a photographing process can be captured, and a best moment can be recorded, to meet a user requirement to the greatest extent.

In some possible implementations, before determining the first image with the highest comprehensive score, the method further includes: determining a second image with a highest comprehensive score in the S frames of local optimal images and the N frames of images; and fixing the second image in the first cache queue.

In some possible implementations, before determining the first image with the highest comprehensive score, the method further includes: continuously collecting T frames of preview images in the second time period after the first moment; and sequentially inputting the T frames of preview images into the first cache queue, where images other than the second image in the first cache queue are replaced with the T frames of preview images.

A total quantity of frames of the plurality of frames of images in the second time period is T.

In some possible implementations, the second time period is 0.5 seconds. For example, it is assumed that a frame rate is 30 frames per second, and the total quantity of frames of the plurality of frames of images in the second time period is 15.

In this solution of this application, after the user taps the shutter, the electronic device may perform frame selection within 1s in the historical direction and within 0.5s in the future direction. If all content in the 1.5 seconds is cached, the electronic device needs to cache at least 1.5s×30 fps=45 frames of images. In this application, local optima are evaluated, and local optimal frames before photographing and images collected after photographing are cached. Therefore, only a small quantity of frames need to be dynamically cached. As described above, in this application, only 12 frames need to be cached in total. If a plurality of frames need to be combined for photographing, only 18 frames need to be cached in total. Therefore, in this solution of this application, internal storage can be greatly saved, and power consumption can be reduced.

In some possible implementations, the determining the first image with the highest comprehensive score includes: comparing the comprehensive score of the second image with a comprehensive score of each of the T frames of preview images, to determine an image with a highest comprehensive score as the first image.

In some possible implementations, the generating a first photo based on the first image includes: fusing the first image and a third image to obtain the first photo. The third image includes at least one image collected immediately after the first image, and/or at least one image collected immediately before the first image.

In some possible implementations, the method further includes: when the first icon is in the second state, receiving an operation of the user on the first icon; and disabling the first function in response to the operation of the user on the first icon, and switching the first icon from the second state to the first state.

In some possible implementations, after the saving the second photo into the gallery, the method further includes: jumping from the preview interface to a gallery interface in response to an operation of the user; and displaying the fourth image and a second icon on the gallery interface, where the second icon indicates that the fourth image is an image obtained through auto capture.

In some possible implementations, the generating a second photo based on the fourth image includes: fusing the fourth image and a fifth image to obtain the second photo. The fifth image includes at least one image collected immediately after the fourth image, and/or at least one image collected immediately before the fourth image.

In some possible implementations, the method further includes: when the first icon is in the first state, receiving an operation of the user on the first icon; displaying first information in a pop-up box in response to the operation of the user on the first icon, where the first information is used to prompt whether to enable the second function; and in response to an operation of the user to confirm to enable the second function, enabling the first function and the second function, switching the first icon from the first state to the second state, and switching the switch button of the second function from the off state to an on state.

In some possible implementations, the method further includes: enabling or disabling the second function in response to an operation of the user in a photo setting interface.

In some possible implementations, when the second function is enabled, the method further includes: prohibiting the second function if the first function is disabled; and removing prohibition on the second function if the first function is enabled again.

In some possible implementations, the method further includes: when the second function is enabled and after an auto capture is completed, starting a next auto capture at an interval of first preset duration.

In some possible implementations, the method further includes: when both the first function and the second function are enabled, skipping executing the second function during execution of the first function, where an execution priority of the first function is higher than an execution priority of the second function.

In some possible implementations, the comprehensive score is a weighted average value of the image quality score, the portrait score, and the action score. Corresponding weighting coefficients are respectively preset for the image quality score, the portrait score, and the action score.

In some possible implementations, for different scenes, influence factors of used image algorithms are different. For example, for the people scene, influence factors of an image algorithm may include image sharpness, a facial expression, a facial composition, a face angle, and eye openness/closure. For another example, for an action scene, influence factors of an image algorithm may include an action evaluation, image sharpness, a facial expression, a facial composition, and a face angle.

In some embodiments, for each type of scene, weighted calculation may be performed based on influence factors of an image algorithm, to obtain an image comprehensive score. For example, for the people scene, weighting coefficients respectively corresponding to the image sharpness, the facial expression, the facial composition, the face angle, and the eye openness/closure are 0.2, 0.5, 0.1, 0.1, and 0.2. For another example, for the action scene, weighting coefficients respectively corresponding to the action evaluation, the image sharpness, the facial expression, the facial composition, and the face angle are 0.4, 0.2, 0.2, 0.1, and 0.1.

The method further includes: identifying, based on an image feature of the preview image, that a current scene is of a first scene type, where for different scene types, different score weighting coefficients are separately preset for the image quality score, the portrait score, and the action score; searching for score weighting coefficients corresponding to the first scene type; and performing a weighted average operation on the image quality score, the portrait score, and the action score based on the score weighting coefficients corresponding to the first scene type, to obtain the comprehensive score.

For example, in the foregoing solution of this application, for the action scene, a comprehensive score is obtained after a weighted average operation is performed, and an image with a highest comprehensive score is selected, that is, a frame of image with a largest action amplitude (for example, a highest upward jump) and a best smile is selected, and the image is used as a captured photo.

In some possible implementations, the method further includes: when an AI beauty function is enabled and the first function is disabled, collecting a third preview image frame stream; and if brightness of the third preview image frame stream is greater than a brightness threshold, the third preview image frame stream has a preset subject, and an action score of the preset subject is greater than an action score threshold, displaying first recommendation information, where the first recommendation information is used to recommend the user to enable the first function.

In some possible implementations, after the displaying first recommendation information, the method further includes: in response to an operation of the user to confirm to enable the first function, disabling the AI beauty function, and enabling the first function.

It may be understood that if brightness of a preview image is greater than the brightness threshold, it can be ensured that after a highlights capture state is entered, the electronic device can obtain good motion blur reduction effect and good image quality during capture, to ensure that a captured photo has good display effect.

According to a second aspect, this application provides an electronic device. The electronic device includes a processor, a camera, a display and a computer program or instructions stored in a memory. The processor is configured to execute the computer program or instructions, so that the method according to the first aspect is performed.

According to a third aspect, this application provides a computer-readable storage medium. The computer-readable storage medium stores a computer program (which may also be referred to as instructions or code) for implementing the method according to the first aspect when the computer program is run on an electronic device according to the second aspect.

It may be understood that, for beneficial effect of the second aspect to the third aspect, refer to related descriptions in the first aspect. Details are not described herein again.

### BRIEF DESCRIPTION OF DRAWINGS

FIG. 1 is a schematic diagram of a solution to a response lag problem during image capture in a related technology;
FIG. 2 is a schematic diagram of an image capture method according to an embodiment of this application;
FIG. 3 is a schematic diagram of a structure of an electronic device to which an image capture method is applied according to an embodiment of this application;
FIG. 4 is a schematic diagram of an architecture of a software system to which an image capture method is applied according to an embodiment of this application;
FIG. 5A is a schematic diagram 1 of an interface to which an image capture method is applied according to an embodiment of this application;
FIG. 5B(1) to FIG. 5B(5) are a schematic diagram 2 of an interface to which an image capture method is applied according to an embodiment of this application;
FIG. 5C is a schematic diagram 2 of an interface to which an image capture method is applied according to an embodiment of this application;
FIG. 6 is a schematic diagram 3 of an interface to which an image capture method is applied according to an embodiment of this application;
FIG. 7 is a schematic diagram 4 of an interface to which an image capture method is applied according to an embodiment of this application;
FIG. 8A to FIG. 8F are a schematic diagram 5 of an interface to which an image capture method is applied according to an embodiment of this application;
FIG. 9A to FIG. 9E are a schematic diagram 6 of an interface to which an image capture method is applied according to an embodiment of this application;
FIG. 10 is a schematic diagram 1 of an algorithm of a manual capture manner in an image capture method according to an embodiment of this application;
FIG. 11 is a schematic diagram 2 of an algorithm of a manual capture manner in an image capture method according to an embodiment of this application;
FIG. 12 is a schematic diagram of an algorithm of an auto capture manner in an image capture method according to an embodiment of this application;
FIG. 13 is a schematic diagram 1 of combined implementation of a manual capture manner and an auto capture manner in an image capture method according to an embodiment of this application;
FIG. 14 is a schematic diagram 2 of combined implementation of manual capture and auto capture in an image capture method according to an embodiment of this application;
FIG. 15 is a schematic diagram 1 of step-by-step implementation of a manual capture manner in an image capture method according to an embodiment of this application;
FIG. 16 is a schematic diagram 2 of step-by-step implementation of a manual capture manner in an image capture method according to an embodiment of this application;
FIG. 17 is a schematic diagram 3 of step-by-step implementation of a manual capture manner in an image capture method according to an embodiment of this application;
FIG. 18 is a schematic diagram 4 of step-by-step implementation of a manual capture manner in an image capture method according to an embodiment of this application;
FIG. 19 is a schematic flowchart 1 of an image capture method according to an embodiment of this application;
FIG. 20 is a schematic flowchart 2 of an image capture method according to an embodiment of this application;
FIG. 21 is a schematic diagram of scene identification, shot division moment detection, and highlight identification in an image capture method according to an embodiment of this application;
FIG. 22 is a schematic flowchart of an image capture method according to an embodiment of this application;
FIG. 23 is a schematic flowchart of an image capture method according to an embodiment of this application.
FIG. 24 is a schematic diagram of an interface to which an image capture method is applied according to an embodiment of this application;
FIG. 25 is a schematic flowchart of another image capture method according to an embodiment of this application; and
FIG. 26 is a schematic diagram of an interface to which another image capture method is applied according to an embodiment of this application.

### DESCRIPTION OF EMBODIMENTS

To make objectives, technical solutions, and advantages of embodiments of this application clearer, the following clearly and completely describes the technical solutions in embodiments of this application with reference to accompanying drawings in embodiments of this application. Clearly, the described embodiments are some embodiments of this application rather than all embodiments. All other embodiments obtained by a person of ordinary skill in the art based on embodiments of this application without creative efforts shall fall within the protection scope of this application.

The term "and/or" in this specification describes an association relationship for describing associated objects and represents that three relationships may exist. For example, A and/or B may represent the following three cases: Only A exists, both A and B exist, and only B exists. The symbol "/" in this specification represents an "or" relationship between associated objects. For example, A/B means A or B.

In the specification and claims in this specification, terms "first", "second", and the like are intended to distinguish between different objects but do not indicate a particular order of the objects. In descriptions of embodiments of this application, unless otherwise stated, "a plurality of" means two or more. For example, "a plurality of processing units" means two or more processing units, and "a plurality of elements" means two or more elements.

In embodiments of this application, the term such as "example" or "for example" is used to represent giving an example, an illustration, or a description. Any embodiment or design scheme described with "example" or "for example" in embodiments of this application should not be explained as being more preferred or having more advantages than another embodiment or design scheme. Exactly, use of the term such as "example" or "for example" is intended to present a relative concept in a specific manner.

Electronic devices such as a mobile phone may be used to take photos and videos. When a user expects to "capture" a highlight by using a mobile phone, the user triggers photographing by tapping an image shooting button. However, because of a response lag phenomenon existing during "capture", a photo finally taken by the user may not be an ideal photo at a specific moment. The response lag may be a response lag (for example, a response delay or an action delay) that is manually caused, or may be a response lag (for example, a camera response delay) caused by the mobile phone.

Currently, a possible manner of obtaining a photo of the highlight is as follows: The user selects to shoot a video first, and then saves a specific frame of image as a photo by performing a screen-shot operation on the video. In this case, an operation of obtaining the photo by the user is cumbersome, which affects use experience of the user. In another aspect, image quality of the photo obtained by extracting an image frame from the video is low, which also reduces use experience of the user.

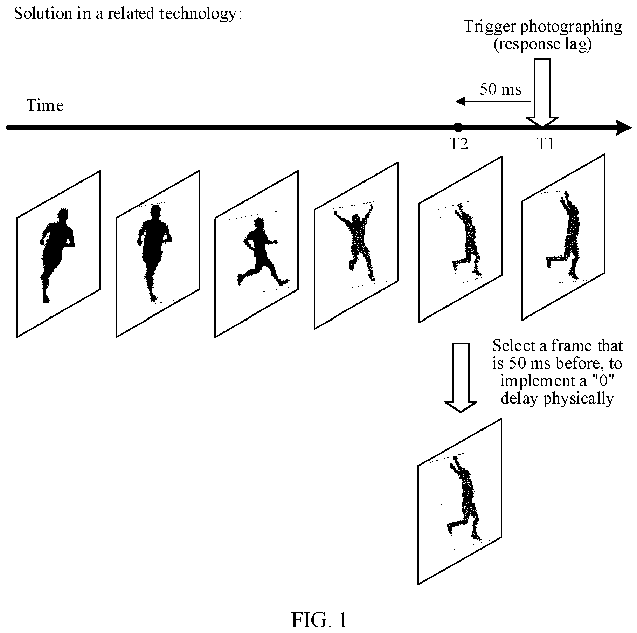

In a related technology, to resolve a problem that a highlight is missed due to a response lag during image capture, a corresponding solution is provided. As shown in FIG. 1, when a user taps an image shooting button (denoted as T1), an image frame at a specific moment (denoted as T2) before the moment T1 is collected, and the image frame is used as a captured photo. For example, a difference between the moment T2 and the moment T1 is a preset value, for example, 50 milliseconds (ms). In this way, a frame that is 50 ms before is selected, to obtain an image frame at a moment before photographing, so as to implement a "0" delay physically and avoid a response lag problem. However, the photo captured in this manner may have low image sharpness, an unfavorable face angle, or a less-than-ideal facial expression. Therefore, the photo may not be an ideal photo at the specific moment, and cannot meet a user requirement.

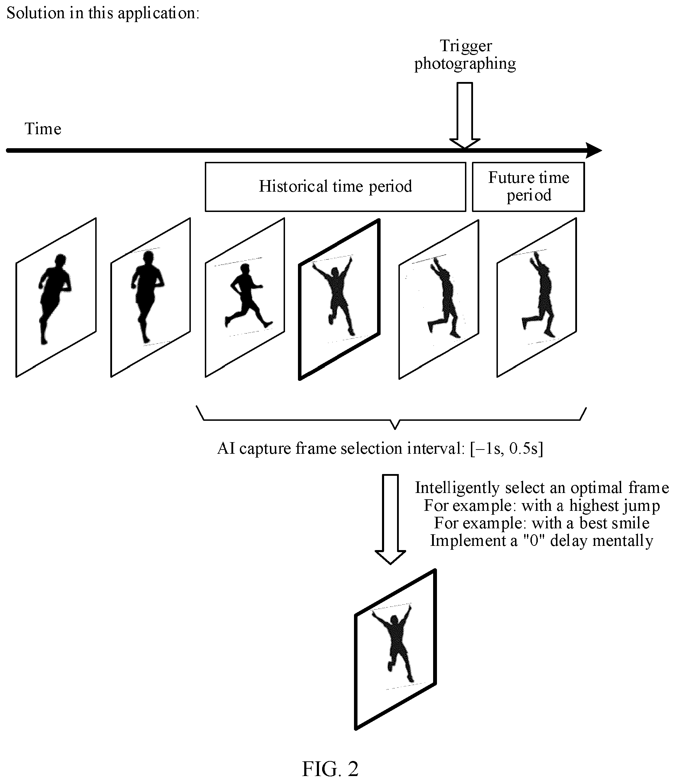

Based on this, embodiments of this application provide an image capture method and an electronic device, to improve user experience through underlying improvement of a mobile phone system. For example, as shown in FIG. 2, in this application, an artificial intelligence (artificial intelligence, AI) capture frame selection interval may be set to a time period from 1 second (s) before photographing to 0.5s after photographing. A time period from 1s before photographing to a photographing moment may be referred to as a historical time period, is also referred to as a first time period, and is denoted as [-1s, 0s]. A time period from the photographing moment to 0.5s after photographing may be referred to as a future time period, is also referred to as a second time period, and is denoted as [0s, 0.5s]. Correspondingly, the AI capture frame selection interval is represented as [-1s, 0.5s]. When photographing is triggered, an optimal frame may be intelligently selected in the AI capture frame selection interval.

A manner of intelligently selecting the optimal frame may include: One frame that meets a preset image condition is selected from a plurality of frames of images in the AI capture frame selection interval, and the frame is used as a local optimal frame. Alternatively, a plurality of frames of images that meet a preset image condition are selected from a plurality of frames of images in the AI capture frame selection interval and are fused, to obtain a local optimal frame. Then, the local optimal frame is output.

The preset image condition may be any one of the following:
(1) An image quality score is greater than or equal to a preset image quality threshold.
(2) A portrait score is greater than or equal to a preset portrait threshold.
(3) An action score is greater than or equal to a preset action threshold.
(4) A weighted average value (namely, a comprehensive score) of an image quality score, a portrait score, and an action score is greater than or equal to a preset overall threshold.

The image quality score may be determined based on image resolution, whether an image is blurred, or the like.

The portrait score may be determined based on an expression of a person in an image. For example, when the expression of the person in the image meets a preset expression, the portrait score may be determined based on a score corresponding to the preset expression. For example, preset expressions may include a smile, a laugh, a blink, a pout, and the like.

The action score may be determined based on an action of a person in an image. For example, when the action of the person in the image meets a preset action, the action score may be determined based on a score corresponding to the preset action. For example, preset actions may include jumping upwards, running, hurdling, basketball shooting, football shooting, and the like.

It should be noted that, the foregoing preset image conditions are examples. It may be understood that, during actual implementation, the preset image condition may alternatively be another possible case. For example, the preset image condition may be: A weighted average value of an image quality score and a portrait score is greater than or equal to a specific preset threshold. Specifically, the preset image condition may be set based on an actual use requirement. This is not limited in embodiments of this application.

The solutions of this application provide a manual capture manner and an auto capture manner.

Manual capture manner: When a camera is opened and a "highlights capture" function is enabled, if a user taps an image shooting button, the electronic device may determine, according to a first frame selection policy provided in this application, a local optimal frame in a time period from 1 second (s) before photographing to 0.5s after photographing, and generate a photo based on the local optimal frame. Therefore, the generated photo is also referred to as a manual capture photo. The first frame selection policy is described in detail below.

Auto capture manner: When the camera is opened, the "highlights capture" function is enabled, and an "auto capture" function is enabled, the electronic device may collect a plurality of frames of preview images in real time, and determine a local optimal frame in the plurality of frames of preview images according to a second frame selection policy provided in this application. When detecting that a scene change (namely, a transition) occurs, the electronic device may generate a photo based on the local optimal frame. Therefore, the generated photo is also referred to as an auto capture photo. The second frame selection policy is described in detail below.

Therefore, this application can achieve the following technical effect: In a capture scene, regardless of whether a reaction moment during photographing is delayed or advanced, an optimal image frame in a photographing process can be captured, and a best moment can be recorded, to meet the user requirement to the greatest extent.

The image capture method provided in embodiments of this application may be applied to an electronic device having an image shooting function. The electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the electronic device are not limited in embodiments of this application.

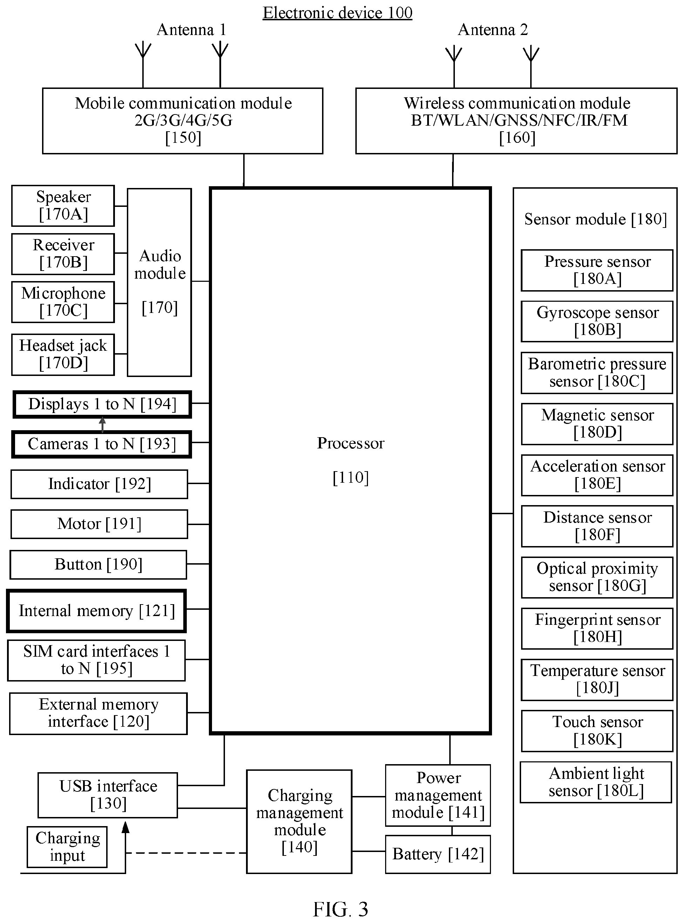

FIG. 3 is a diagram of a structure of the electronic device according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a magnetic sensor 180D, an acceleration sensor 180E, a distance sensor 180F, an optical proximity sensor 180G, a fingerprint sensor 180H, a touch sensor 180K, an ambient light sensor 180L, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. For example, the processor 110 is configured to perform the image capture method in embodiments of this application.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The external memory 120 is usually an externally located memory. In this embodiment of this application, the external memory is a memory other than internal storage of the electronic device and the cache of the processor, and the memory is usually a non-volatile memory.

The internal memory 121, also referred to as the "internal storage", may be configured to store computer-executable program code. The executable program code includes instructions. The internal memory 121 may include a program storage area and a data storage area. The program storage area may store an operating system, an application required by at least one function (for example, a sound playing function or an image playing function), and the like.

The display 194 is configured to display an image, a video, and the like. The display 194 includes a display panel. The display panel may use an organic light-emitting diode (organic light-emitting diode, OLED). In some embodiments, the electronic device 100 may include one or N displays 194, where N is a positive integer greater than 1.

The electronic device 100 further includes various types of sensors, and can convert various different physical signals into electrical signals. For example, the pressure sensor 180A is configured to sense a pressure signal, and can convert the pressure signal into an electrical signal. The gyroscope sensor 180B may be configured to determine a motion posture of the electronic device 100. A barometric pressure sensor 180C is configured to measure barometric pressure. The magnetic sensor 180D includes a Hall sensor. The acceleration sensor 180E may detect magnitudes of accelerations of the electronic device 100 in various directions (usually along three axes). The distance sensor 180F is configured to measure a distance. The electronic device 100 may measure the distance by using infrared or lasers. The optical proximity sensor 180G may include, for example, a light-emitting diode (LED) and an optical detector, for example, a photodiode. The ambient light sensor 180L is configured to sense ambient light brightness. The electronic device 100 may adaptively adjust brightness of the display 194 based on the sensed ambient light brightness. The fingerprint sensor 180H is configured to collect a fingerprint. The electronic device 100 may implement functions such as unlocking, accessing an application lock, photographing, and answering a call by using a collected fingerprint feature. A temperature sensor 180J is configured to detect a temperature. In some embodiments, the electronic device 100 executes a temperature processing policy based on the temperature detected by the temperature sensor 180J. A bone conduction sensor 180M may obtain a vibration signal.

The touch sensor 180K is also referred to as a "touch panel". The touch sensor 180K may be disposed on the display 194, and the touch sensor 180K and the display 194 form a touchscreen. The touchscreen is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the electronic device 100 at a position different from that of the display 194.

For example, in this embodiment of this application, the touch sensor 180K may detect a tap operation performed by the user on an icon of an application, transfer the detected tap operation to the application processor, and determine that the tap operation is used to start or run the application, so as to execute a running operation of the application.

A wireless communication function of the electronic device 100 may be implemented through the antenna 1, the antenna 2, the mobile communication module 150, the wireless communication module 160, the modem processor, the baseband processor, and the like.

The electronic device 100 may implement an audio function, for example, music playing and recording, through the audio module 170, the speaker 170A, the receiver 170B, the microphone 170C, the headset jack 170D, the application processor, and the like.

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The electronic device 100 may implement an image shooting function through the ISP, the camera 193, the video codec, the GPU, the display 194, the application processor, and the like.

This embodiment of this application is specifically described above by using the electronic device 100 as an example. It should be understood that the structure shown in this embodiment of this application does not constitute a specific limitation on the electronic device 100. The electronic device 100 may have more or fewer components than those shown in the figure, or may combine two or more components, or may have a different component configuration. Various components shown in the figure may be implemented in hardware including one or more signal processing and/or application-specific integrated circuits, software, or a combination of hardware and software.

The electronic device provided in this embodiment of this application may be user equipment (user equipment, UE), for example, may be a mobile terminal (for example, a mobile phone of the user), a tablet computer, a desktop computer, a laptop computer, a handheld computer, a netbook, a personal digital assistant (personal digital assistant, PDA), or the like.

In addition, an operating system runs on the foregoing components. The operating system is, for example, an iOS operating system developed by Apple, an Android open-source operating system developed by Google, or a Windows operating system developed by Microsoft. An application may be installed and run on the operating system.

The operating system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

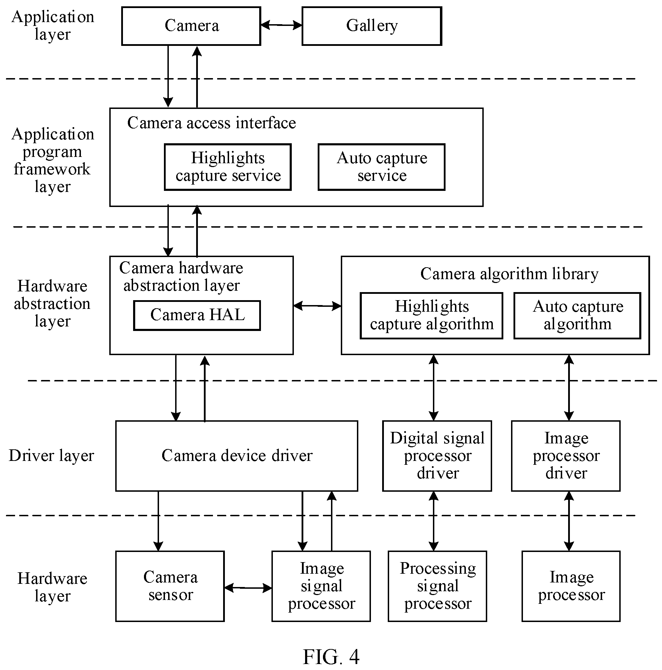

FIG. 4 is a block diagram of the software structure of the electronic device 100 according to an embodiment of this application.

In the layered architecture, the system is divided into several layers, and each layer has a clear role and task. The layers communicate with each other through a software interface. In some embodiments, the Android system is divided into five layers: an application (applications) layer, an application framework (application framework) layer, a hardware abstraction layer (hardware abstraction layer, HAL), a kernel (kernel) layer, and a hardware layer from top to bottom.

The application layer may include a series of application packages. In embodiments of this application, the application packages may include a camera, a gallery, and the like.

The application framework layer provides an application programming interface (application programming interface, API) and a programming framework for applications at the application layer. The application framework layer includes some predefined functions. In embodiments of this application, the application framework layer may include a camera access interface, and the camera access interface may include a highlights capture service and an auto capture service. The camera access interface is configured to provide an application programming interface and a programming framework for a camera application.

The hardware abstraction layer is an interface layer between the application framework layer and the kernel layer, and provides a virtual hardware platform for the operating system. In embodiments of this application, the hardware abstraction layer may include a camera hardware abstraction layer and a camera algorithm library.

The camera hardware abstraction layer may provide virtual hardware (camera HAL for short) of camera devices such as a front camera and a rear camera of the camera. The camera algorithm library may include a highlights capture algorithm and an auto capture algorithm. In other words, the camera algorithm library includes running code and data for implementing the image capture method provided in embodiments of this application.

The kernel layer is a layer between hardware and software. The kernel layer includes drivers of various hardware. The kernel layer may include a camera device driver, a digital signal processor driver, an image processor driver, and the like. The camera device driver is configured to drive a camera sensor to collect an image and drive the image signal processor to preprocess the image. The digital signal processor driver is configured to drive the digital signal processor to process the image. The image processor driver is configured to drive the graphics processing unit to process the image.

With reference to the foregoing hardware structure and system structure, the following provides an overview of the image capture method in embodiments of this application.

Step 1: The electronic device 100 enables an image shooting function to obtain a preview image frame stream.

Step 1 is continuously performed. In response to an operation (for example, a tap operation) of the user on an icon of the camera application, the camera application invokes the camera access interface at the application framework layer to start the camera application, and further sends, by invoking a camera device (for example, the rear camera) in the camera hardware abstraction layer, an instruction for starting the camera application. The camera hardware abstraction layer sends the instruction to the camera device driver at the kernel layer. The camera device driver may start a sensor of the rear camera to collect preview image optical signals through the sensor, transmits the preview image optical signals to the image signal processor for preprocessing to obtain the preview image frame stream (an image sequence formed by at least two frames of preview images), and then transmits the preview image frame stream to the camera hardware abstraction layer through the camera device driver.

Step 2: The electronic device 100 obtains a processing stream based on the preview image frame stream.

Step 2 is continuously performed. The camera hardware abstraction layer may send the preview image frame stream to the camera algorithm library. Based on support of the digital signal processor and the image processor, the camera algorithm library may first perform downsampling on the original stream to obtain a low-resolution processing stream.

Step 3: The electronic device 100 evaluates image frames in the processing stream to determine a local optimal frame.

Step 3 is continuously performed. Based on support of the digital signal processor and the image processor, the camera algorithm library may invoke an image quality detection algorithm, a face detection algorithm, a smile detection algorithm, a blink detection algorithm, and the like to detect image quality, image content, an action, and the like of each image frame, so as to determine an image quality score, a portrait score, an action score, and a comprehensive score of each image frame, and further determine a highlight image frame, namely, the local optimal frame.

Step 4: The electronic device 100 displays a captured highlight photo.

The camera algorithm library may send the captured highlight photo to the camera hardware abstraction layer. Then, the camera hardware abstraction layer may send the photo for display.

It should be noted that, although embodiments of this application are described by using the Android system as an example, a basic principle is also applicable to an electronic device that is based on an operating system such as iOS or Windows.

An execution body of the image capture method provided in embodiments of this application may be the electronic device (for example, a mobile phone) mentioned above, or may be functional modules and/or functional entities in the electronic device that can implement the image capture method, and the solutions of this application can be implemented in a hardware manner and/or a software manner. Details can be determined based on the actual use requirement, and this is not limited in embodiments of this application. With reference to the accompanying drawings, the following uses the electronic device as an example to describe the image capture method provided in embodiments of this application.

To better understand embodiments of this application, the following first briefly describes, with reference to schematic diagrams of interfaces of the mobile phone, the "highlights capture" function and the "auto capture" function that are provided in embodiments of this application.

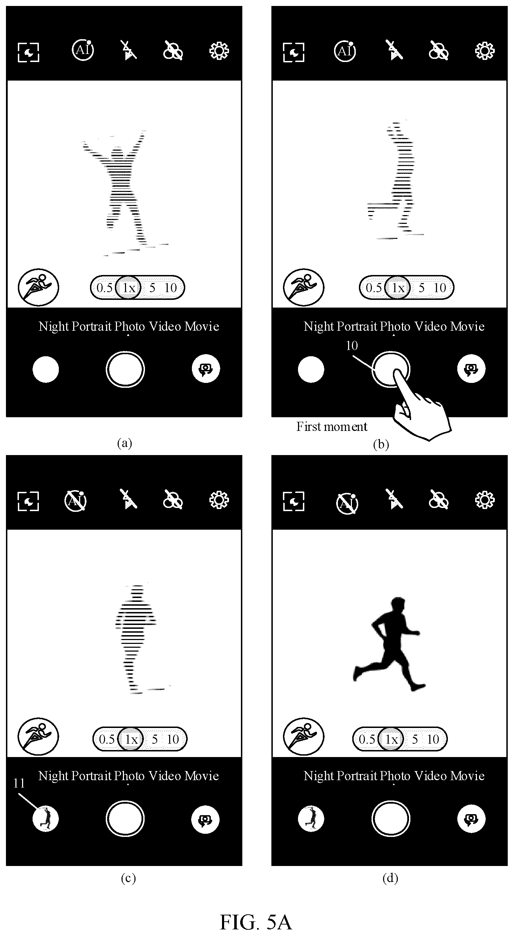

When "highlights capture" is in an off state, if the user triggers photographing, the electronic device completes photographing in a conventional photographing manner, to be specific, collects a frame of image at a moment at which the user triggers photographing, and generates a photo based on the frame of image. FIG. 5A is a diagram of an interface of generating a photo when the user triggers photographing when "highlights capture" is in the off state. As shown in (b) in FIG. 5A, the "highlights capture" function is not enabled, and the user taps the image shooting button 10 to trigger photographing. As shown in (c) in FIG. 5A, in response to an operation of the user, the electronic device collects a frame of image at a moment at which the user triggers photographing, generates a photo based on the frame of image, and displays a thumbnail 11 of the photo. (a) and (d) in FIG. 5A respectively show camera preview interfaces before and after photographing. It should be noted that the electronic device generates the photo based on the frame of image at a photographing moment (a first moment), and does not perform frame selection from a plurality of frames of images before and after photographing.

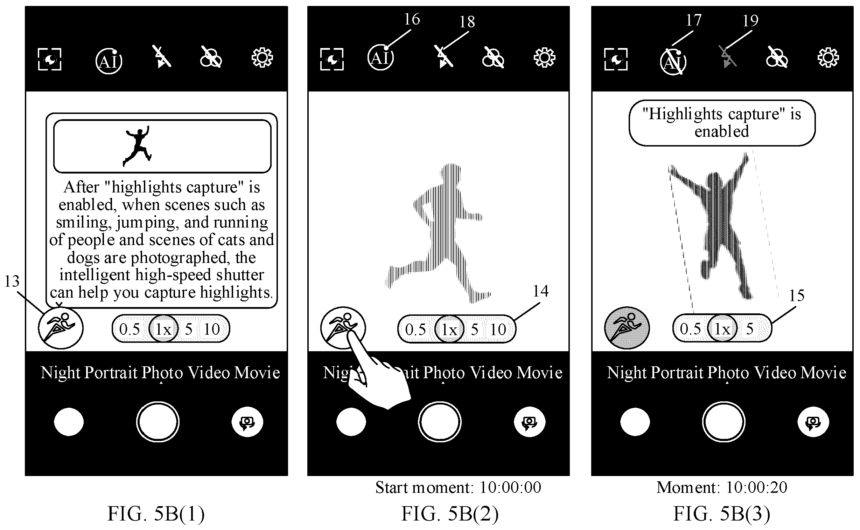

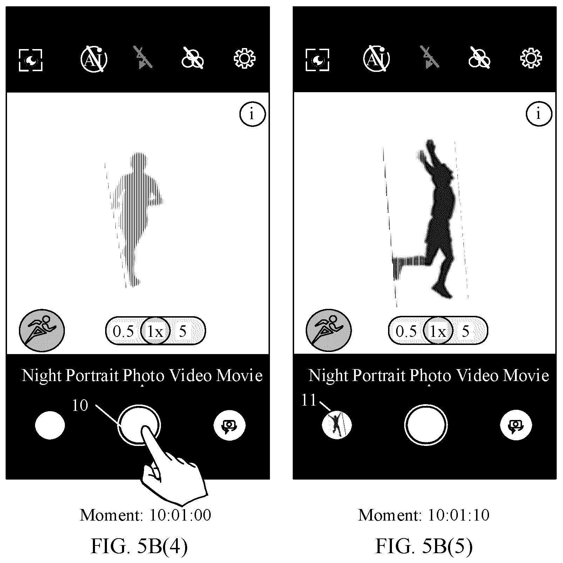

FIG. 5B(1) to FIG. 5B(5) are a schematic diagram of an interface of enabling "highlights capture" and capturing an image according to an embodiment of this application. As shown in FIG. 5B(1), after the camera is opened, the mobile phone enters a photo mode and displays a photographing preview interface. A switch icon 13 of the "highlights capture" function provided in embodiments of this application is added to the photographing preview interface or a photographing function bar. In an initial case, the "highlights capture" function may be in the off state by default, and the switch icon 13 is in an unselected state by default. To recommend the function to a customer, the electronic device may introduce the "highlights capture" function for the switch icon 13 by using a pop-up window. For example, content of the pop-up window is as follows: After "highlights capture" is enabled, when scenes such as smiling, jumping, and running of people and scenes of cats and dogs are photographed, the intelligent high-speed shutter can help you capture highlights.

When "highlights capture" is in an on state, if the user triggers photographing, the electronic device can "capture" a highlight, to provide the user with a photo of the highlight. As shown in FIG. 5B(2), the user taps the switch icon 13 to trigger enabling of the "highlights capture" function. As shown in FIG. 5B(3), in response to an operation of the user, the electronic device updates the switch icon 13 from the unselected state (for example, with a light icon color) to a selected state (for example, with a dark icon color). Correspondingly, the electronic device enables the "highlights capture" function, and displays, in the photographing preview interface, prompt information indicating that "highlights capture" is enabled. In this case, if the user triggers photographing, the electronic device can "capture" a highlight, to provide the user with a photo of the highlight.

As shown in FIG. 5B(4), when the "highlights capture" function is enabled, the user taps the image shooting button 10 to trigger photographing. As shown in FIG. 5B(5), in response to an operation of the user, the electronic device "captures" a highlight to provide the user with a photo of the highlight, and displays a thumbnail 11 of the photo. It should be noted that the electronic device selects, according to a frame selection policy provided in embodiments of this application, a frame of image before a photographing moment to generate the photo. If the user needs to view an original image of the photo, the user may tap the thumbnail 11 of the photo. In response to an operation of the user, the electronic device switches from the current photographing preview interface to a gallery interface, and the original image of the photo is displayed on the gallery interface for viewing by the user.

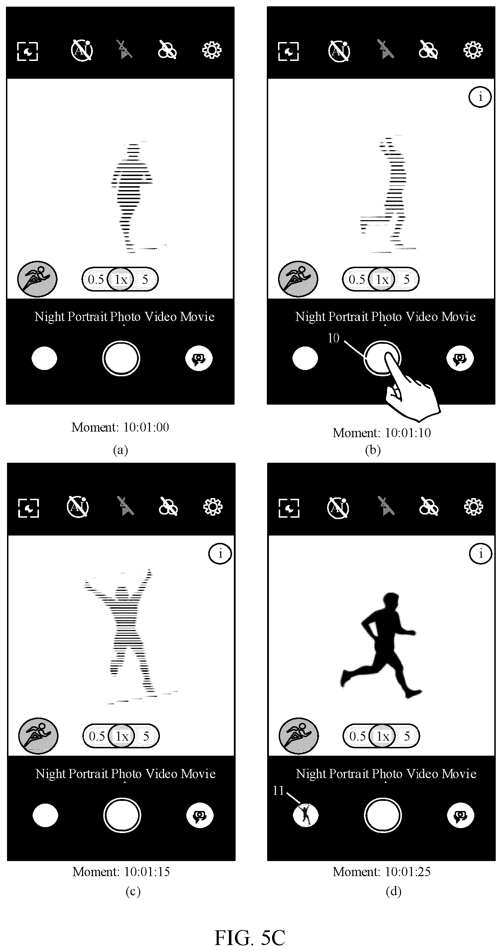

FIG. 5C is a schematic diagram of another interface of enabling "highlights capture" and capturing an image according to an embodiment of this application. (a) in FIG. 5C shows a camera preview interface in preset duration (for example, within 1 second) before photographing, and the electronic device collects images in the duration. As shown in (b) in FIG. 5C, when the "highlights capture" function is enabled, the user taps the image shooting button 10 to trigger photographing. (c) in FIG. 5C shows a camera preview interface in preset duration (for example, within 0.5 seconds) after photographing is triggered, and the electronic device still collects images in the duration and does not generate a photo. As shown in (d) in FIG. 5C, in response to an operation of the user, the electronic device selects a frame from a plurality of frames of images collected before photographing is triggered and a plurality of frames of images collected after photographing is triggered to generate a photo, and displays a thumbnail 11 of the photo. In this case, a highlight is "captured", and a photo of the highlight is provided for the user. It should be noted that the electronic device selects, according to a frame selection policy provided in embodiments of this application, a frame of image after a photographing moment to generate the photo.

It should be noted that, when the "highlights capture" function is switched from off to on, the electronic device correspondingly changes some function settings or parameter settings of the camera.

In some embodiments, when the "highlights capture" function is switched from off to on, the electronic device adjusts a shutter parameter to improve a shutter speed, to help "capture" a highlight to provide the user with a photo of the highlight.

In some embodiments, as shown in FIG. 5B(2), when the "highlights capture" function is disabled, a zoom range 14 supported by the camera is [0.5x, 10x], where x represents a multiple, for example, may be displayed as 0.5x, 1x, 5x, and 10x in a user interface. As shown in FIG. 5B(3), when the "highlights capture" function is enabled, a zoom range 15 supported by the camera changes to [0.5x, 5x], for example, may be displayed as 0.5x, 1x, and 5x in a user interface. In other words, after the "highlights capture" function is enabled, the camera supports a maximum of 5x long focus. In this way, it is more conducive to "capture" a highlight to provide the user with a photo of the highlight.

In some embodiments, when the "highlights capture" function is disabled, an "AI beauty" function of the camera is enabled by default. As shown in FIG. 5B(2), an icon of the "AI beauty" function is in an on state 16. When the "highlights capture" function is enabled, the "AI beauty" function of the camera is disabled. As shown in FIG. 5B(3), the icon of the "AI beauty" function is in an off state 17. In other words, after the "highlights capture" function is enabled, the electronic device automatically disables the "AI beauty" function. In this way, it is more conducive to "capture" a highlight to provide the user with a photo of the highlight.

In some embodiments, when the "highlights capture" function is disabled, a "flash" function of the camera supports the user to set the "flash" function to be on or off. As shown in FIG. 5B(2), an icon of the "flash" function is in a settable state 18. When the "highlights capture" function is enabled, the "flash" function of the camera is prohibited. As shown in FIG. 5B(3), the icon of the "flash" function is in a prohibited state 19. In other words, after the "highlights capture" function is enabled, the electronic device prohibits the "flash" function. In this way, it is more conducive to "capture" a highlight to provide the user with a photo of the highlight.

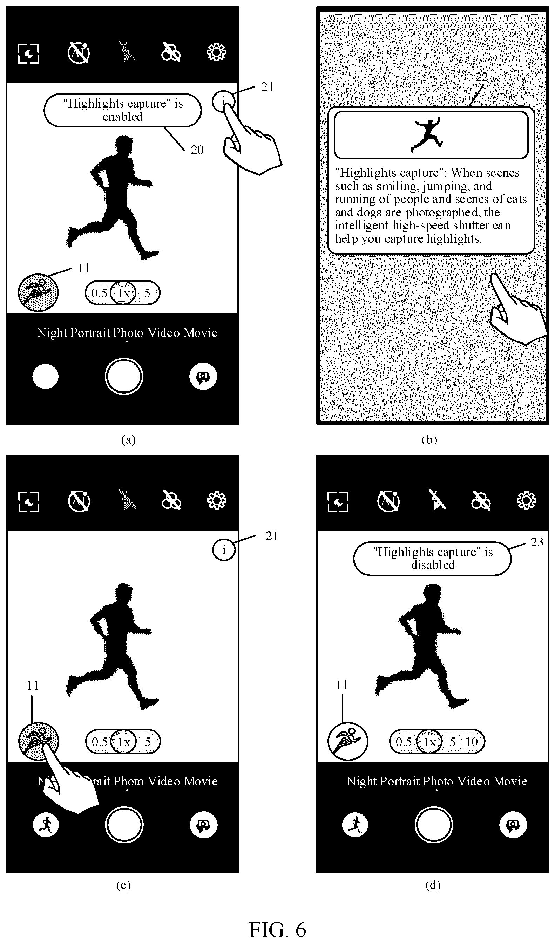

In embodiments of this application, the electronic device prompts, to the user in various manners, related status information of the "highlights capture" function. As shown in (a) in FIG. 6, when the "highlights capture" function is enabled, the electronic device updates a switch icon 11 of the "highlights capture" function to a selected state, displays prompt information 20 indicating that "highlights capture" is enabled, hides the prompt information 20 after a period of time, and displays a prompt entry 21 of "highlights capture". After the user taps the prompt entry 21, as shown in (b) in FIG. 6, the electronic device pops up a prompt box 22: "Highlights capture": When scenes such as smiling, jumping, and running of people and scenes of cats and dogs are photographed, the intelligent high-speed shutter can help you capture highlights. In various prompt manners, it is more conducive for the user to understand the "highlights capture" function and a status change.

In embodiments of this application, as shown in (c) in FIG. 6, when the "highlights capture" function is enabled, if the user taps the switch icon 11 of the "highlights capture" function, as shown in (d) in FIG. 6, the electronic device may disable the "highlights capture" function, update the switch icon 11 of the "highlights capture" function to an unselected state, display prompt information 23 indicating that "highlights capture" is disabled, hide the prompt information 23 after a period of time, and hide the prompt entry 21 of "highlights capture".

It should be noted that, when the "highlights capture" function is switched from on to off, the electronic device may automatically reset the zoom range supported by the camera, automatically enable the "AI beauty" function, and remove prohibition on the "flash" function.

As described above, when the "highlights capture" function is enabled, the user may trigger "highlights capture" by tapping the image shooting button to obtain a highlight photo. In addition, in this application, the "auto capture" function is newly added. When the "auto capture" function is enabled, the electronic device may automatically perform "highlights capture" to obtain a highlight photo, and the user does not need to tap the image shooting button. The following describes the "auto capture" function.

In some embodiments, the "auto capture" function is in an off state by default. Embodiments of this application provide the following two manners of enabling the "auto capture" function.

Manner 1: The electronic device prompts, to the user by using a pop-up window, whether to enable the "auto capture" function.

In some embodiments, after the user enables the "highlights capture" function for the first time and then disables the "highlights capture" function, when the user manually triggers enabling of the "highlights capture" function again, the electronic device may prompt, to the user by using a pop-up window, whether to enable the "auto capture" function.

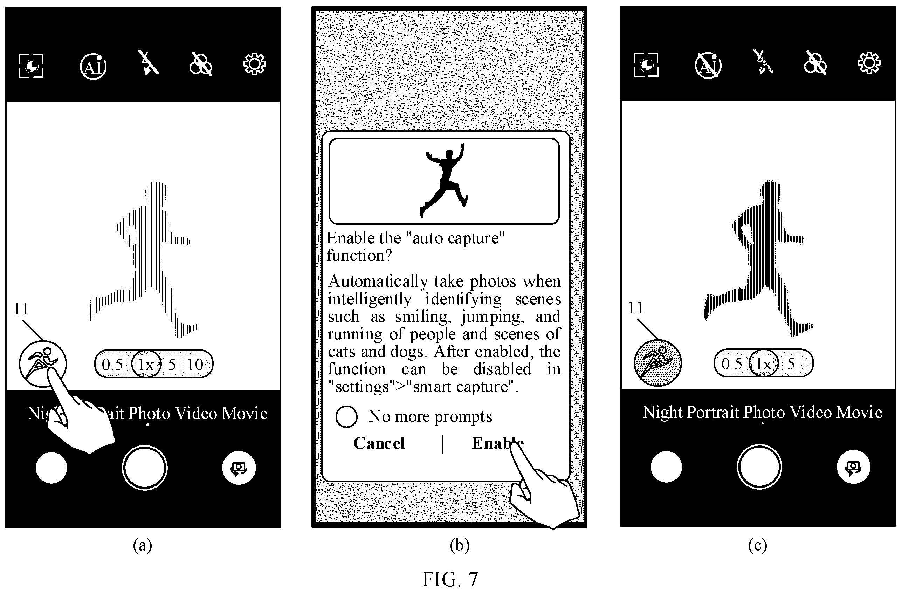

For example, as shown in (a) in FIG. 7, when the "highlights capture" function is disabled, after the user taps the switch icon 11 of the "highlights capture" function again, as shown in (b) in FIG. 7, the electronic device displays the following content in a pop-up window: Enable the "auto capture" function? Automatically take photos when intelligently identifying scenes such as smiling, jumping, and running of people and scenes of cats and dogs. After enabled, the function can be disabled in "settings">"smart capture". In addition, a "cancel" control and an "enable" control are displayed. After the user taps the switch icon 11 of the "enable" control, as shown in (c) in FIG. 7, the electronic device no longer displays the pop-up window, and switches back to the photographing preview interface. In this case, both the "highlights capture" function and the "auto capture" function are enabled. Therefore, the electronic device can not only "automatically capture" a highlight photo, but also "capture" a highlight photo in response to an operation of the user to trigger photographing.

Manner 2: The user triggers enabling of "auto capture" in "settings">"smart capture">"auto capture", and the electronic device enables the "auto capture" function in response to an operation of the user.

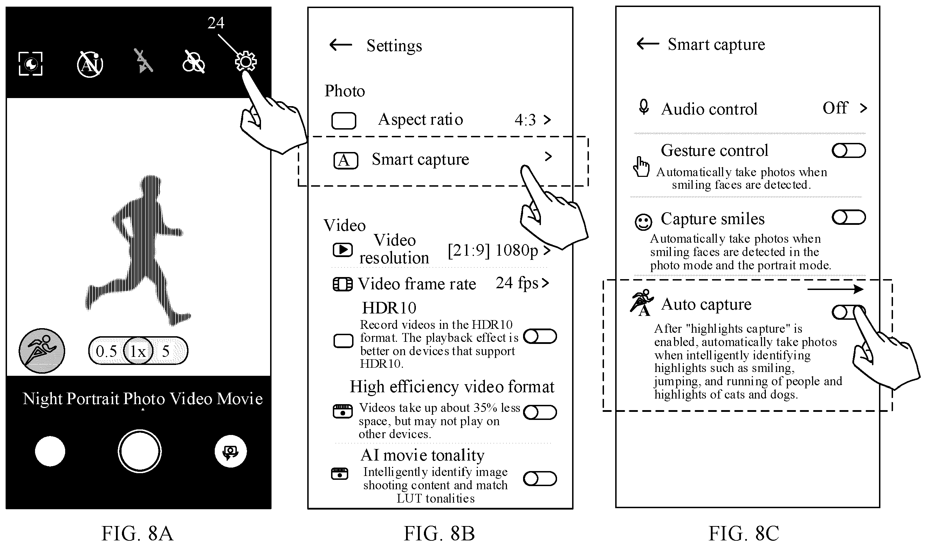

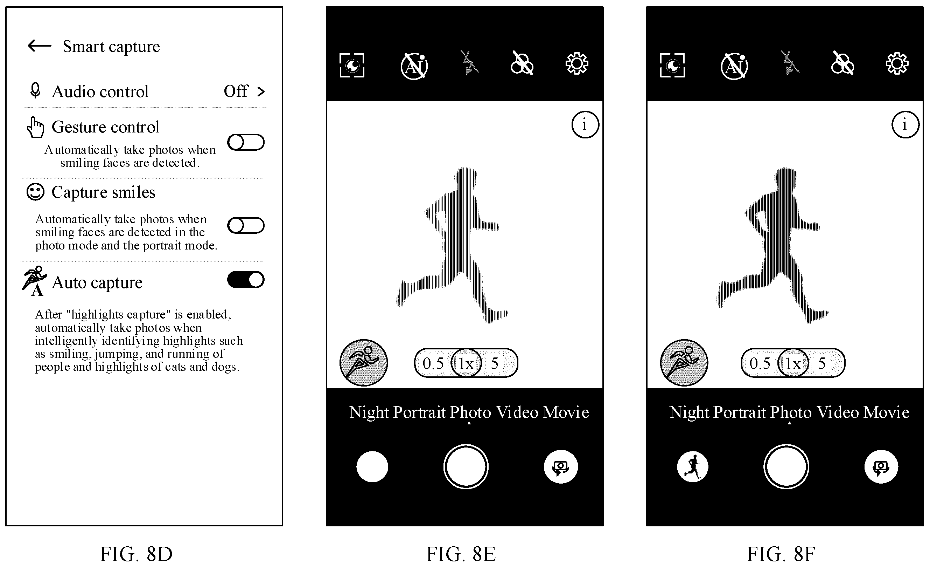

For example, as shown in FIG. 8A, after the user taps a photo setting icon 24 in a photo function bar, as shown in FIG. 8B, the electronic device switches to a photo setting interface, where the photo setting interface includes a smart capture option. After the user taps the smart capture setting option, as shown in FIG. 8C, the electronic device switches from the photo setting interface to a smart capture setting interface, and the smart capture setting interface includes an auto capture setting option. It is assumed that a switch of the auto capture setting option is in an off state. After the user slides a finger in an arrow direction on a switch icon of the auto capture setting option, as shown in FIG. 8D, the electronic device switches the switch of the auto capture setting option to an on state, and enables the "auto capture" function. After the "auto capture" function is enabled, as shown in FIG. 8E and FIG. 8F, the electronic device can automatically take photos when intelligently identifying scenes such as smiling, jumping, and running of people and scenes of cats and dogs.

It should be noted that, when the "highlights capture" function is enabled, the electronic device may enable the "auto capture" function in response to an operation of the user. Certainly, the electronic device may also disable the "auto capture" function in response to an operation of the user. Specifically, when the "auto capture" function is enabled, the user may trigger disabling of the "auto capture" function in "settings">"smart capture">"auto capture".

In some embodiments, when the "auto capture" function is enabled, if the "highlights capture" function is disabled, the "auto capture" function is automatically prohibited. If the "highlights capture" function is enabled again, prohibition on the "auto capture" function is automatically removed.

In some embodiments, when the "auto capture" function is enabled, if the "highlights capture" function is enabled, the electronic device can not only automatically take photos, that is, implement "auto capture", when intelligently identifying scenes such as smiling, jumping, and running of people and scenes of cats and dogs, but also "capture" a highlight photo in response to an operation of the user to trigger photographing.

As described above, in embodiments of this application, not only a switch of the "highlights capture" function is added to an interface of the photo mode, but also a switch of the "auto capture" function is added to the photo setting interface, so that it is convenient for the user to perform setting based on the actual use requirement.

In embodiments of this application, the electronic device further adds a corresponding mark to a photo obtained through "auto capture", to help the user learn that the electronic device "automatically captures" the highlight photo and help the user view and manage the photo.

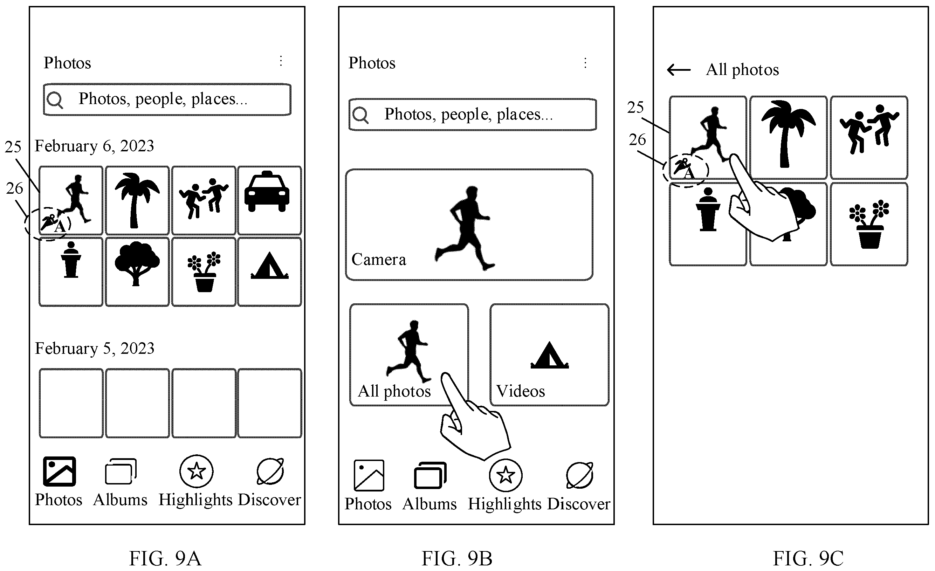

For example, FIG. 9A shows a photo interface of the gallery, and the photo interface displays thumbnails of all photos in the gallery, including a thumbnail of a photo obtained through "auto capture", a thumbnail of a photo obtained by triggering "highlights capture" by the user, and a thumbnail of a photo obtained by triggering photographing by the user. For example, the electronic device may overlay and display an auto capture mark 26 on the thumbnail 25 of the photo obtained through "auto capture", to help the user identify the photo obtained through "auto capture".

For another example, FIG. 9B shows an album interface of the gallery, and the album interface displays a thumbnail of a set of all photos in the gallery. After the user taps the thumbnail of the set of all the photos, the electronic device switches to an interface of thumbnails of all the photos, and the interface displays a thumbnail of a highlight photo obtained through "auto capture", a thumbnail of a highlight photo obtained by triggering "highlights capture" by the user, and a thumbnail of a photo obtained by triggering photographing by the user. Similar to that shown in FIG. 9A, the electronic device may overlay and display an auto capture mark 26 on the thumbnail 25 of the photo obtained through "auto capture", to help the user identify the photo obtained through "auto capture".

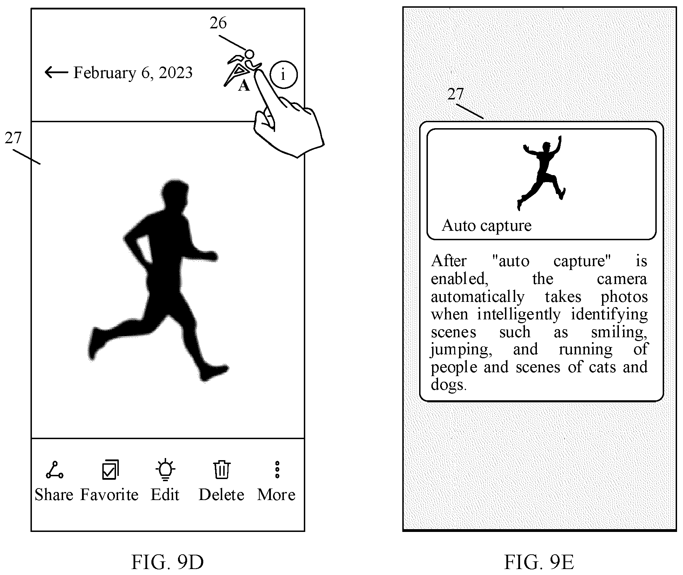

After the user taps the thumbnail 25 of the photo obtained through "auto capture" shown in FIG. 9A or FIG. 9C, as shown in FIG. 9D, the electronic device displays the photo 27 obtained through "auto capture", and displays the auto capture mark 26 in a preset area. After the user taps the auto capture mark 26, as shown in FIG. 9E, the electronic device describes the "auto capture" function in a pop-up window. For example, the pop-up window displays the following content: After "auto capture" is enabled, the camera automatically takes photos when intelligently identifying scenes such as smiling, jumping, and running of people and scenes of cats and dogs.

The foregoing describes settings and application processes, on the interfaces of the mobile phone, of the "highlights capture" function and the "auto capture" function that are provided in embodiments of this application. With reference to the accompanying drawings, the following describes in detail a frame selection policy and a capture principle of the "highlights capture" function and a frame selection policy and a capture principle of the "auto capture" function in embodiments of this application.

(1) Frame selection policy and capture principle of the "highlights capture" function (corresponding to manual capture)

After the "highlights capture" function is enabled, the electronic device may respond to an operation of the user to trigger photographing, and the intelligent high-speed shutter captures highlights of scenes such as smiling, jumping, and running of people and scenes of cats and dogs.

It should be first noted that, in embodiments of this application, when the camera is opened and the "highlights capture" function is enabled, before the electronic device receives the operation of the user to trigger photographing, the camera of the electronic device continuously collects a plurality of frames of preview images, and correspondingly, a preview image frame stream may be obtained. For the collected preview image frame stream, the electronic device may periodically analyze images of a preset quantity of frames to determine a local optimal frame, and store the local optimal frame in a cache queue.

For ease of description, it is assumed herein that a frame rate is 30 fps. In this case, the camera may collect 30 frames of images every second. fps is an abbreviation for "frames per second", and refers to a quantity of frames per second.

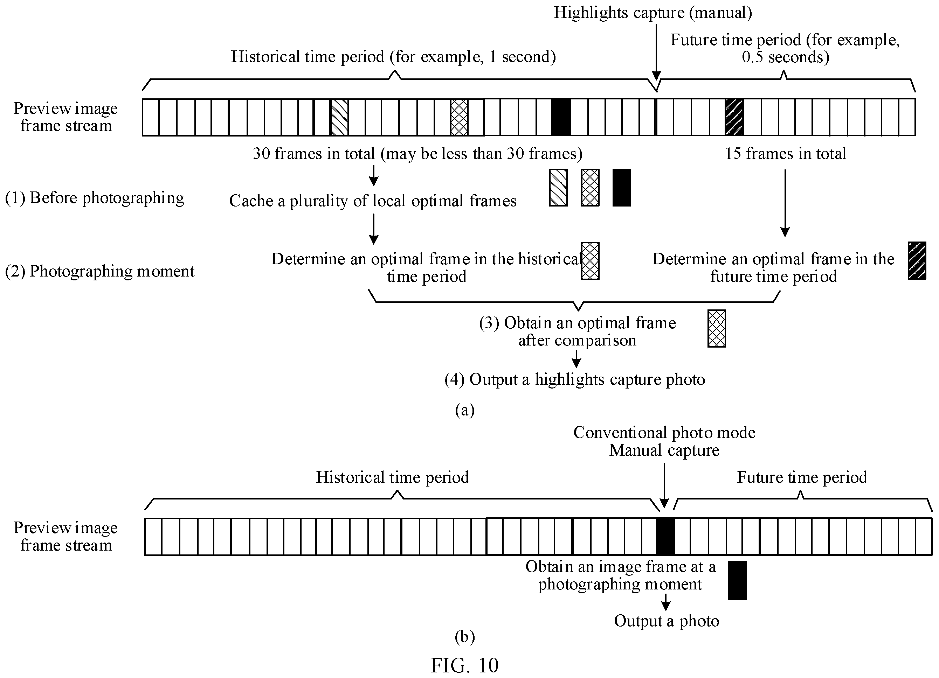

FIG. 10 is a schematic diagram of a highlights capture process (where photographing needs to be manually triggered) according to an embodiment of this application.

In embodiments of this application, for example, with reference to FIG. 10, a frame selection interval of "highlights capture" may be [-1s, 0.5s]. In other words, in the solutions of this application, an optimal frame of "highlights capture" may be selected from a plurality of frames of images in an interval including a historical time period (1s in total) before manual photographing (highlights capture) and a future time period (0.5s in total) after manual photographing.

In the historical time period, there are 30 frames of images in total, or there may be less than 30 frames. The following uses 30 frames of images as an example for description. In the future time period, there are 15 frames of images in total. In other words, in the solutions of this application, the optimal frame of "highlights capture" may be selected from the 30 frames of images before manual photographing and the 15 frames of images after manual photographing.

(a) in FIG. 10 shows a frame selection process of "highlights capture" in the solutions of this application. With reference to (a) in FIG. 10, before photographing, preview images are continuously collected to obtain a preview image frame stream. For example, for the preview image frame stream, a local optimal frame is periodically determined for every 10 frames of images, and is sequentially input into a cache queue. Due to a limitation of a memory size, only a limited quantity (for example, three) of recently determined local optimal frames are reserved in the cache queue for subsequent determining of an optimal frame of the historical time period. For ease of description, the following provides descriptions by using an example in which three recently determined local optimal frames are alternately reserved in the cache queue.

To better describe that the frame selection process of "highlights capture" in the solutions of this application is different from a frame selection manner of the conventional photographing manner, (b) in FIG. 10 shows the frame selection manner of the conventional photographing manner. With reference to (b) in FIG. 10, when "highlights capture" is in the off state, if the user triggers photographing, the electronic device completes photographing in the conventional photographing manner, to be specific, collects a frame of image at a moment at which the user triggers photographing, and generates a photo based on the frame of image.

In some embodiments, each local optimal frame and a plurality of adjacent frames may be input together into the cache queue, to help implement subsequent image fusion on the local optimal frame with reference to the plurality of adjacent frames to obtain a local optimal frame with higher image quality.

With reference to FIG. 10, at a photographing moment at which highlights capture is triggered, the electronic device determines the optimal frame of the historical time period, and determines an optimal frame of the future time period. Then, the optimal frame of the historical time period and the optimal frame of the future time period are compared to determine an optimal frame of the two, generate and output a highlights capture photo based on the optimal frame, and save the photo in the album gallery.

It should be noted that that the historical time period has duration of 1 second and the future time period has duration of 0.5 seconds is used as an example for description herein. It may be understood that, during actual implementation, specific duration of the historical time period and the future time period may be determined based on the actual use requirement. This is not limited in embodiments of this application.

It should be further noted that FIG. 10 is described by using an example in which there are 30 frames in total in the historical time period. It may be understood that because a moment at which photographing is triggered is random, and the frame rate may alternatively be another parameter, there may be less than 30 frames in the historical time period, and the historical time period may be less than 1 second.

With reference to FIG. 10, the foregoing describes an overall idea of the frame selection policy of the "highlights capture" function provided in embodiments of this application. With reference to the accompanying drawings, the following further describes in detail a specific implementation of the frame selection policy of the "highlights capture" function.

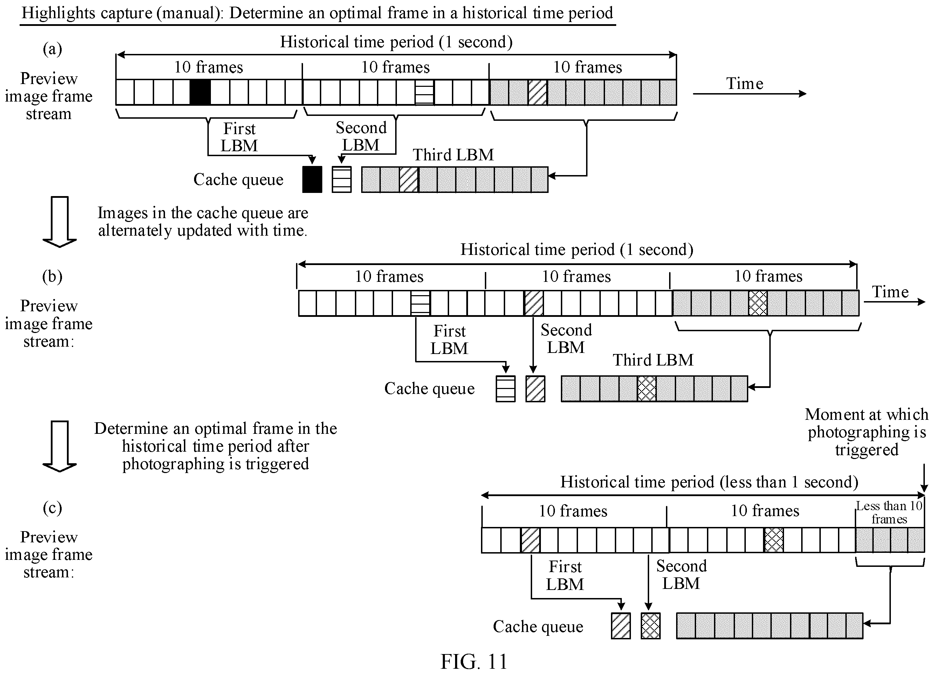

FIG. 11 is a schematic diagram of determining an optimal frame of a historical time period according to an embodiment of this application.

As shown in (a) in FIG. 11, a historical time period is 1 second, a preview image frame stream includes 30 frames of recently collected images, and a local optimal frame (local best moment, LBM) in every 10 frames of images is determined. Correspondingly, a cache queue stores a first LBM, a second LBM, and 10 frames of recent images. The 10 frames of recent images include a third LBM.

10 frames of recently collected images are input into the cache queue with time, so that storage content of the cache queue is updated. According to a first-in first-out rule, a first LBM stored in the cache queue last time is discarded, and a second LBM stored in the cache queue last time is updated to a first LBM.

As shown in (b) in FIG. 11, a historical time period is 1 second, a preview image frame stream includes 30 frames of recently collected images, a last second LBM in the cache queue is updated to a first LBM of this time, a last third LBM is updated to a second LBM of this time, and 10 frames of recent images are updated and cached. The 10 frames of recent images include a third LBM of this time.

As described above, 10 frames of recently collected images are sequentially input into the cache queue with time, so that the storage content of the cache queue is alternately updated according to the first-in first-out rule.

When the user triggers photographing, there may be less than 10 frames of recently collected images. As shown in (c) in FIG. 11, a historical time period is less than 1 second. It is assumed that a preview image frame stream includes 24 frames of recently collected images, a last second LBM in the cache queue is updated to a first LBM of this time, a last third LBM is updated to a second LBM of this time, and four frames of recent images are updated and cached. The four frames of recent images do not include a third LBM.

According to the image capture method provided in embodiments of this application, after the highlights capture function is enabled, the electronic device continuously and automatically collects a plurality of frames of images, analyzes a local optimal frame in the images, and caches the local optimal frame of the recently collected images. After the user triggers photographing, the electronic device continues to collect a plurality of frames of images and analyzes a local optimal frame in the images. Then, the electronic device determines one optimal frame in the local optimal frame determined before photographing and the local optimal frame determined after photographing, and uses the optimal frame as a highlights capture photo. The finally output highlights capture photo is the optimal frame in a time period before and after photographing. Therefore, in this solution of this application, in a capture scene, regardless of whether a reaction moment during photographing is delayed or advanced, an optimal image frame in a photographing process can be captured, and a best moment can be recorded, to meet the user requirement to the greatest extent.

### (2) Frame selection policy and capture principle of the "auto capture" function (corresponding to auto capture)

After the "auto capture" function is enabled, the electronic device can automatically take photos when intelligently identifying scenes such as smiling, jumping, and running of people and scenes of cats and dogs, and the user does not need to tap the image shooting button.

It should be first noted that, in embodiments of this application, when the camera is opened, the "highlights capture" function is enabled, and the "auto capture" function is enabled, the camera of the electronic device continuously collects a plurality of frames of preview images, and correspondingly, a preview image frame stream may be obtained. For the collected preview image frame stream, the electronic device may perform frame-by-frame comparison to determine a local optimal frame in a current scene, and store the local optimal frame in a cache queue. When detecting that a scene change (namely, a transition) occurs, the electronic device may generate an auto capture photo based on the local optimal frame.

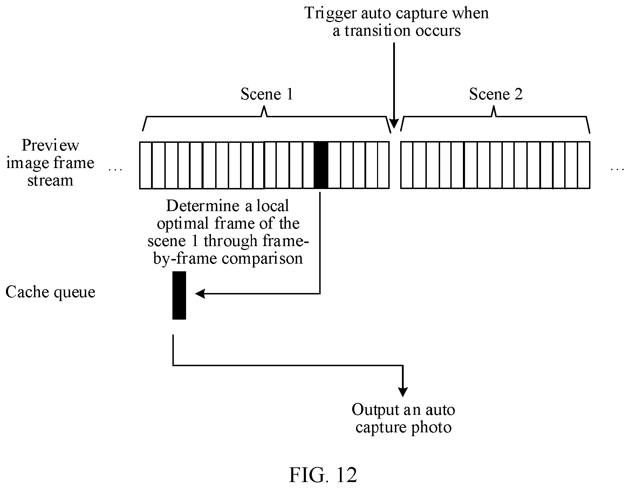

FIG. 12 is a schematic diagram of an auto capture process according to an embodiment of this application. As shown in FIG. 12, the electronic device continuously collects preview images, determines a shooting scene (referred to as a scene 1) based on an object in the preview images, and performs frame-by-frame comparison on the images in a preview image frame stream to determine a local optimal frame of the scene 1. When the electronic device identifies a scene 2 (in other words, a transition occurs), the electronic device generates and outputs an auto capture photo based on the local optimal frame of the scene 1, and saves the photo in an album gallery.

The foregoing describes the frame selection policy and the capture principle of manual capture, and the frame selection policy and the capture principle of auto capture. The following describes possible scenarios of combined implementation of manual capture and auto capture.

In some embodiments, when the "highlights capture" function is enabled, and the "auto capture" function is enabled, an execution sequence of "auto capture" and "manual capture" is not limited, and is specifically determined based on the actual use requirement. This is not limited in embodiments of this application.

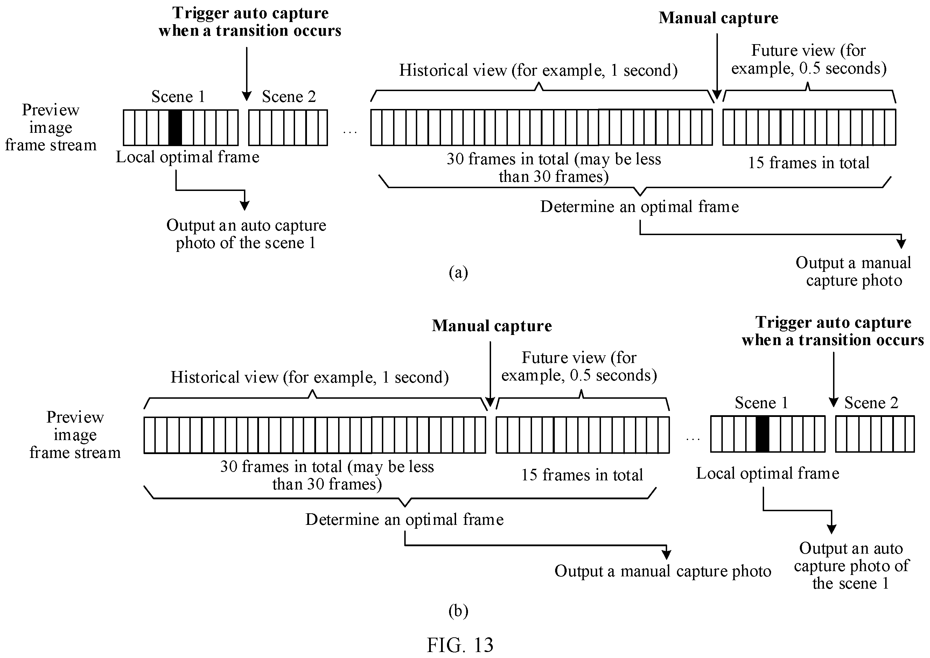

For example, as shown in (a) in FIG. 13, the electronic device may first execute "auto capture", and then execute "manual capture".

For another example, as shown in (b) in FIG. 13, the electronic device may alternatively first execute "manual capture", and then execute "auto capture".

It should be noted that, in a scenario in which execution of "manual capture" is triggered, an execution priority of "manual capture" is higher than an execution priority of "auto capture", in other words, "manual capture" is preferentially executed, "auto capture" is prohibited in a process of "manual capture", and "auto capture" is resumed after "manual capture" is completed. Therefore, execution of "auto capture" does not affect or interfere with "manual capture". The following shows corresponding solution policies by using examples with reference to the accompanying drawings.

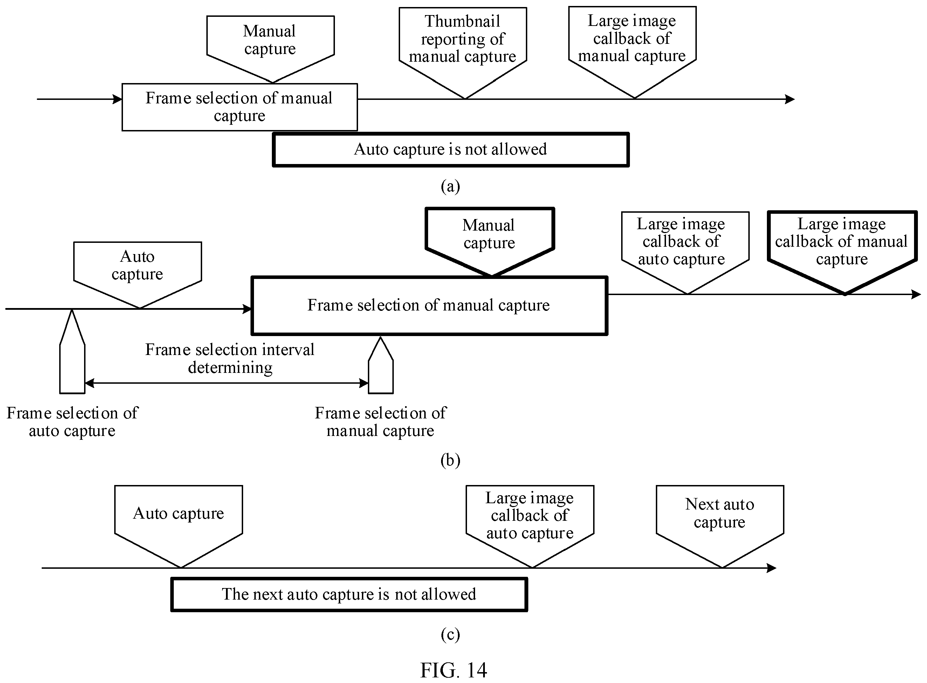

For example, as shown in (a) in FIG. 14, after receiving an operation of the user to trigger photographing, the electronic device performs processes of manual capture such as frame selection, thumbnail reporting, and large image callback, and auto capture is not allowed in this time period.

For another example, as shown in (b) in FIG. 14, a time interval between frame selection of auto capture and frame selection of manual capture should be greater than or equal to a preset first interval threshold. For example, the first interval threshold may be set to 2s. For example, when the time interval between the frame selection of auto capture and the frame selection of manual capture is 3s, because of a long distance, a process of auto capture and a process of manual capture do not affect each other. For manual capture, a thumbnail and a large image are reported to an Android application package (Android application package, APK). For auto capture, a large image is reported to the APK, but a thumbnail is not reported. For another example, when the time interval between the frame selection of auto capture and the frame selection of manual capture is 1s, because of a short distance, when manual capture is triggered, auto captured is canceled, and a process of manual capture is preferentially performed.

In embodiments of this application, a time interval between two consecutive auto captures should be greater than or equal to a preset second interval threshold. For example, the second interval threshold may be set to 3 minutes. In this way, frequent auto captures can be avoided, load can be reduced, and power consumption can be reduced. For example, as shown in (c) in FIG. 14, a next auto capture is not allowed within three minutes after an auto capture. For example, in a process of photographing the user skipping rope, skipping rope by the user includes repeated actions, and collected preview images are also repeated. Therefore, it is necessary to perform a next auto capture at an interval of a period of time, to avoid frequent auto captures.

It should be noted that, because manual capture involves frame selection before photographing (for example, 1 second) and frame selection after photographing (for example, 0.5 seconds), and because of a memory limitation and uncertainty of arrival of a manual capture moment, this application optimizes storage of frames in an entire frame selection time window. For ease of understanding, the following describes in detail processes of frame selection and caching of manual capture in a state-by-state manner.

### Manual capture (state 0): image caching and frame selection processes before photographing

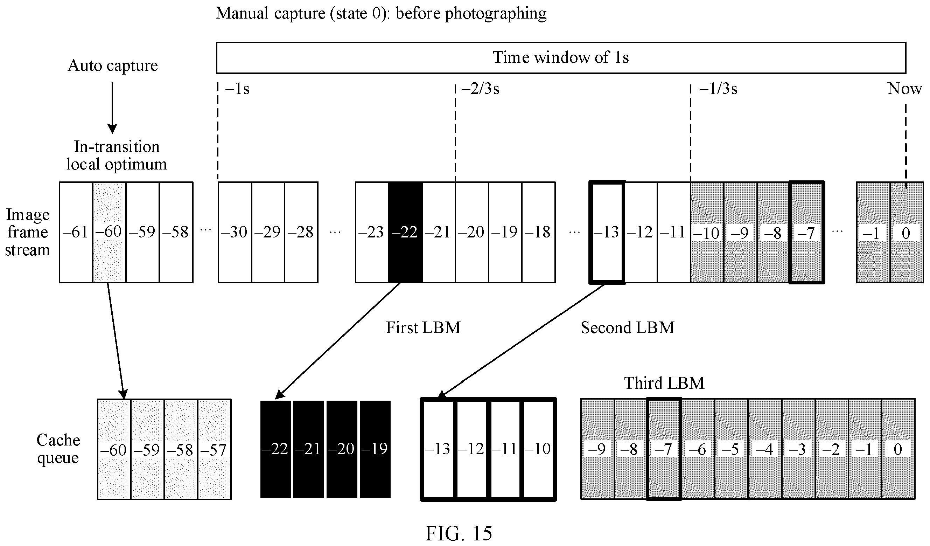

FIG. 15 is a schematic diagram of image caching and frame selection processes of manual capture before photographing. As shown in FIG. 15, in a time window of 1s before photographing (that is, the foregoing historical time period), a primary focus in a preview image frame stream is 30 frames of recently collected images, and an LBM in every 10 frames of images is determined. For ease of understanding, an image collected during photographing is marked as 0, an image collected before photographing is marked with a negative sequence number, and an image collected after photographing is correspondingly marked with a positive sequence number.

In embodiments of this application, the electronic device may determine an LBM in a plurality of frames of images according to a preset frame selection principle. For example, the preset frame selection principle may be as follows: A weighted average value (namely, a comprehensive score) of an image quality score, a portrait score, and an action score is greater than or equal to a preset overall threshold.

For example, as shown in FIG. 15, image frames are analyzed and compared according to the preset frame selection principle, to determine that a local optimal frame (a first LBM) in 10 frames in [-1s, -2/3s] is a frame -22, a local optimal frame (a second LBM) in 10 frames in [-2/3s, -1/3s] is a frame -13, and a local optimal frame (a third LBM) in 10 frames in [-1/3s, 0s] is a frame -7.

A cache queue stores four frames of images (-22, -21, -20, and -19) obtained through screening, four frames of other images (-13, -12, -11, and -10), and 10 frames of recently collected images (-9, -8, -7, -6, -6, -4, -3, -2, -1, and 0).

It should be noted that, in embodiments of this application, after the user taps the shutter, the electronic device may perform frame selection within 1s in a historical direction and within 0.5s in a future direction. If all content in the 1.5s is cached, the electronic device needs to cache at least 1.5s×30 fps=45 frames of images. In this application, through evaluation of the local optimal LBM, only a small quantity of frames need to be dynamically cached. As described above, only 4+4+10=18 frames need to be cached, to implement backtracking in the historical direction. If a plurality of frames do not need to be combined for photographing, only 1+1+10=12 frames need to be cached. Therefore, in this solution of this application, internal storage can be greatly saved, and power consumption can be reduced. The following provides descriptions by using an example in which a quantity of dynamically cached frames is 18.

In addition, as shown in FIG. 15, auto capture images (for example, -60, -59, -58, and - 57) are further stored in the cache queue. The frame -60 is an in-transition local optimal frame.

### Manual capture (state 1): image caching and frame selection processes during photographing

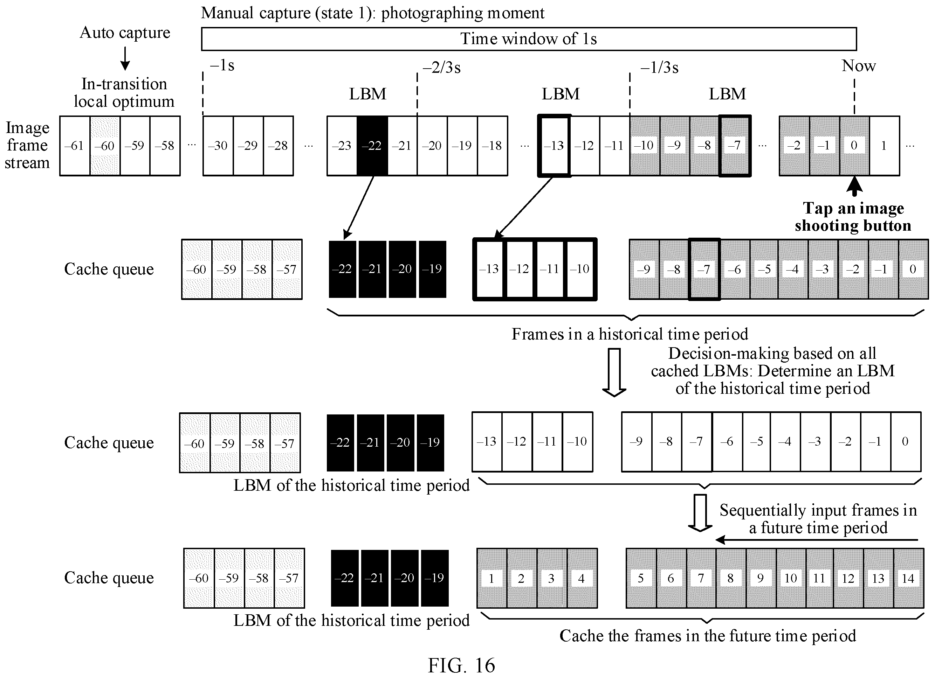

FIG. 16 is a schematic diagram of image caching and frame selection processes of manual capture at a photographing moment. As shown in FIG. 16, when receiving that the user taps the image shooting button, the electronic device performs determining based on all cached frames in a historical time period, to determine a local optimal frame LBM (-22) of the historical time period. In a cache queue, frames -22, -21, -20, and -19 are temporarily fixed, and another position is occupied by a sequentially input frame of a future time period. The cache queue not only caches the LBM of the historical time period, but also caches the frame of the future time period. A total quantity of cached frames is 18.

### Manual capture (state 2): image caching and frame selection processes in a future direction

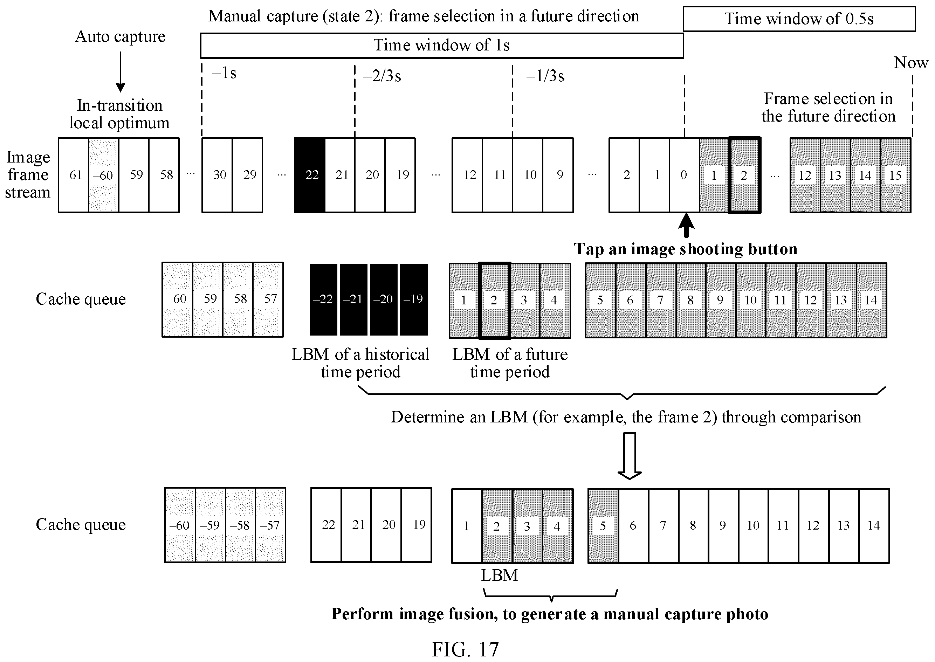

FIG. 17 is a schematic diagram of image caching and frame selection processes of manual capture after photographing. As shown in FIG. 17, in a time window of 0.5s after photographing (that is, the foregoing future time period), a primary focus in a preview image frame stream is 15 frames of recently collected images, and the images are sequentially input into a cache queue. In some embodiments, each time a frame of image is input into the cache queue, the electronic device may compare the frame of input image with an LBM of a historical time period. If the LBM of the historical time period is better than the frame of input image, the LBM of the historical time period continues to be fixed. If the frame of input image is better than the LBM of the historical time period, the frame of input image is determined as a new local optimal frame, and is temporarily fixed. Another position is occupied by a sequentially input frame of the future time period. Then, a frame of newly input image is further compared with the new local optimal frame. The rest my be deduced by analogy. Finally, an optimal frame in a time period of a time window of 1s before photographing and the time window of 0.5s after photographing is determined.

As shown in FIG. 17, it is finally determined that the optimal frame in the time period of the time window of 1s before photographing and the time window of 0.5s after photographing is a frame 2. In this case, image fusion is performed on images of frames 2, 3, 4, and 5, to generate a manual capture photo.

### Manual capture (state 3): continue capture in a short time period

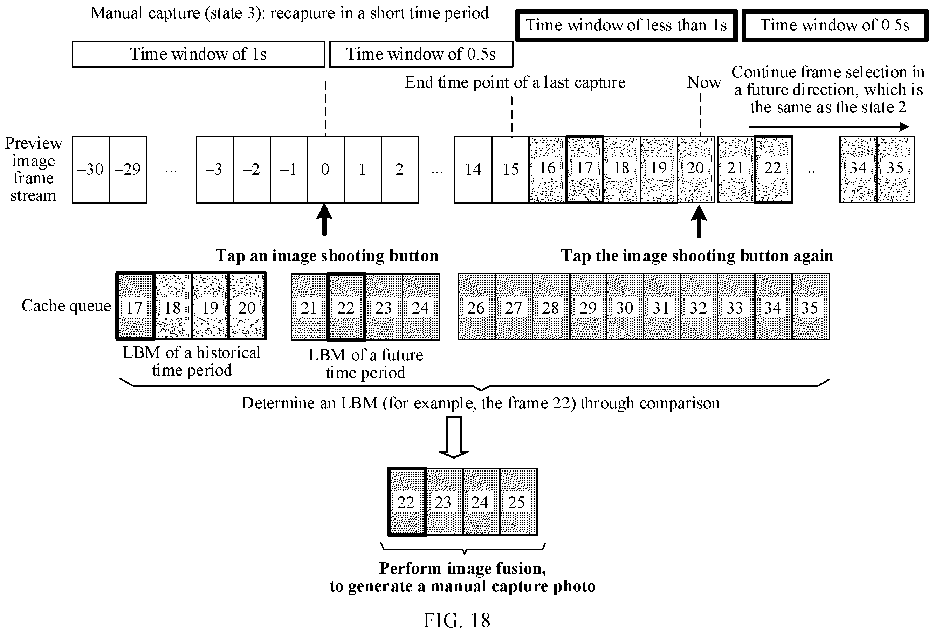

FIG. 18 is a schematic diagram of a process of continuing manual capture in a short time period after manual capture. As shown in FIG. 18, in some cases, because the user continuously taps the image shooting button in a short time period, two manual captures appear in the short time period. For a previous manual capture, frame selection may be performed based on approximately 45 frames of preview images [-30, 15]. For a current manual capture, frame selection may be performed based on approximately 20 frames of preview images [16, 35]. This is because a time interval between the two consecutive manual captures is short, and a time window of the current manual capture in a historical direction is actually less than 1s. For example, as shown in FIG. 18, a quantity of collected frames of the current manual capture in the historical direction is 5. A time window of the current manual capture in a future direction is not affected, and is still 0.5s. For example, as shown in FIG. 18, a quantity of collected frames of the current manual capture in the future direction is 15.

It should be noted that, for a scenario in which manual capture is continued in the short time period, frame selection and caching manners in the historical direction and frame selection and caching manners in the future direction are similar to processing situations of the state 0 to the state 2. Specifically, in the historical direction, a primary focus in a preview image frame stream is five frames of recently collected images (16, 17, 18, 19, and 20), an LBM of a historical time period is determined as a frame 17, and correspondingly, four frames of images (17, 18, 19, and 20) are fixed in a cache queue. In the future direction, collected images (21, 22, ..., and 35) are sequentially input into the cache queue. Each time a frame of image is input into the cache queue, the electronic device may compare the frame of input image with the LBM of the historical time period. If the LBM of the historical time period is better than the frame of input image, the LBM of the historical time period continues to be fixed. If the frame of input image is better than the LBM of the historical time period, the frame of input image is determined as a new local optimal frame, and is temporarily fixed. Another position is occupied by a sequentially input frame of a future time period. Then, a frame of newly input image is further compared with the new local optimal frame. The rest my be deduced by analogy. Finally, an optimal frame in the approximately 20 frames of preview images [16, 35] is determined.

As shown in FIG. 18, it is finally determined that the optimal frame is a frame 22. In this case, image fusion is performed on images of frames 22, 23, 24, and 25, to generate a manual capture photo.

The foregoing describes frame selection policies and capture principles of the image capture method provided in embodiments of this application. Based on the foregoing content, the following describes implementation procedures of the image capture method provided in embodiments of this application.

The image capture method provided in embodiments of this application includes two manners: auto capture and manual capture. For auto capture, in a preview process, preview images are collected, frame-by-frame comparison is performed to select an optimal frame, and the optimal frame is cached. Once a scene change occurs, photographing is automatically triggered, to obtain an auto capture photo. For manual capture, after the user taps the image shooting button (the shutter), an optimal frame is selected from a plurality of image frames within 1s in a historical direction of photographing and within 0.5s in a future direction of photographing, and the optimal frame is used as a highlights capture photo.

### Embodiment 1

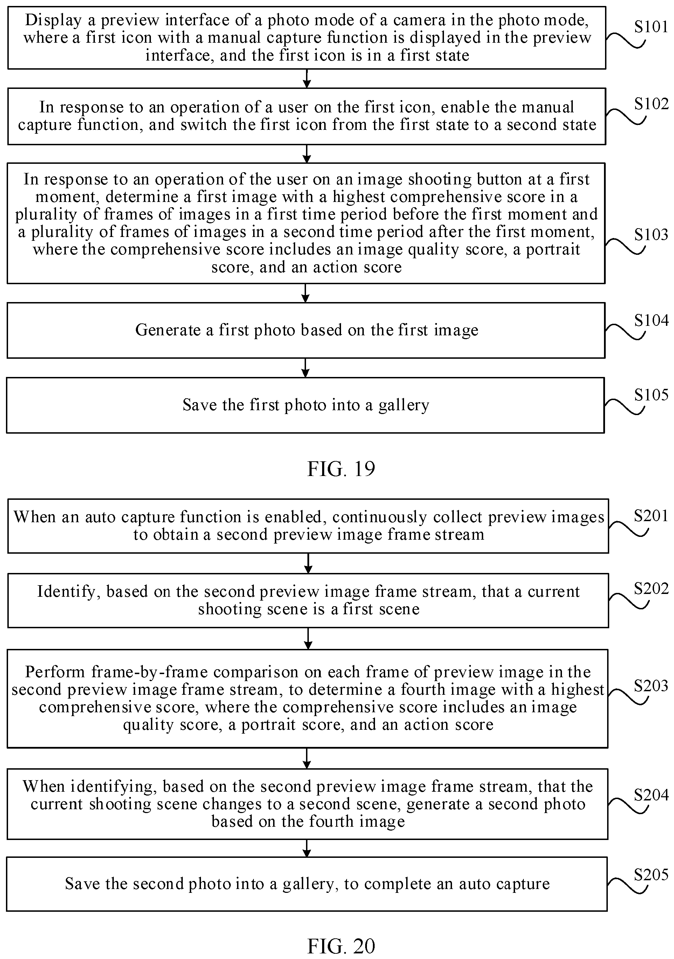

FIG. 19 is a schematic flowchart of manual capture of an image capture method according to an embodiment of this application. As shown in FIG. 19, the method includes the following steps S101 to S105.

S101: Display a preview interface of a photo mode of a camera in the photo mode, where a first icon with a manual capture function is displayed in the preview interface, and the first icon is in a first state.

S102: In response to an operation of a user on the first icon, enable the manual capture function, and switch the first icon from the first state to a second state.

S103: In response to an operation of the user on an image shooting button at a first moment, determine a first image with a highest comprehensive score in a plurality of frames of images in a first time period before the first moment and a plurality of frames of images in a second time period after the first moment, where the comprehensive score includes an image quality score, a portrait score, and an action score.

For example, after the user taps the image shooting button (a shutter), an optimal frame is selected from a plurality of image frames within 1s in a historical direction of photographing and within 0.5s in a future direction of photographing, and the optimal frame is used as a highlights capture photo.

In some embodiments, a "highlights capture" function is run during photo preview, and a comprehensive score, namely, a "highlights score", of each frame of image is obtained by performing real-time analysis and comparison on a plurality of frames of preview images, to select an image frame with a highest "highlights score" (that is, an optimal frame). In some other embodiments, a "highlights ranking" of each frame of image is obtained based on a comprehensive score by performing real-time analysis and comparison on a plurality of frames of preview images, to select an image frame with a highest "highlights ranking".

S104: Generate a first photo based on the first image.

S105: Save the first photo into a gallery.

According to the image capture method provided in this embodiment of this application, after the highlights capture function is enabled, an electronic device continuously and automatically collects a plurality of frames of images, analyzes a local optimal frame in the images, and caches the local optimal frame of the recently collected images. After the user triggers photographing, the electronic device continues to collect a plurality of frames of images and analyzes a local optimal frame in the images. Then, the electronic device determines one optimal frame in the local optimal frame determined before photographing and the local optimal frame determined after photographing, and uses the optimal frame as a highlights capture photo. The finally output highlights capture photo is the optimal frame in a time period before and after photographing. Therefore, in this solution of this application, in a capture scene, regardless of whether a reaction moment during photographing is delayed or advanced, an optimal image frame in a photographing process can be captured, and a best moment can be recorded, to meet a user requirement to the greatest extent.

### Embodiment 2

FIG. 20 is a schematic flowchart of auto capture of an image capture method according to an embodiment of this application. As shown in FIG. 20, the method includes the following steps S201 to S205.

S201: When an auto capture function is enabled, continuously collect preview images to obtain a second preview image frame stream.

S202: Identify, based on the second preview image frame stream, that a current shooting scene is a first scene.

S203: Perform frame-by-frame comparison on each frame of preview image in the second preview image frame stream, to determine a fourth image with a highest comprehensive score, where the comprehensive score includes an image quality score, a portrait score, and an action score.

S204: When identifying, based on the second preview image frame stream, that the current shooting scene changes to a second scene, generate a second photo based on the fourth image.

S205: Save the second photo into a gallery, to complete an auto capture

According to the image capture method provided in this embodiment of this application, when the auto capture function is enabled, in a preview process, preview images are collected, frame-by-frame comparison is performed to select an optimal frame, and the optimal frame is cached. Once a scene change occurs, photographing is automatically triggered, to obtain an auto capture photo.

It should be noted that an electronic device may separately perform steps S101 to S105; or may separately perform steps S201 to S205; or may first perform S101 to S105, and then perform S201 to S205.

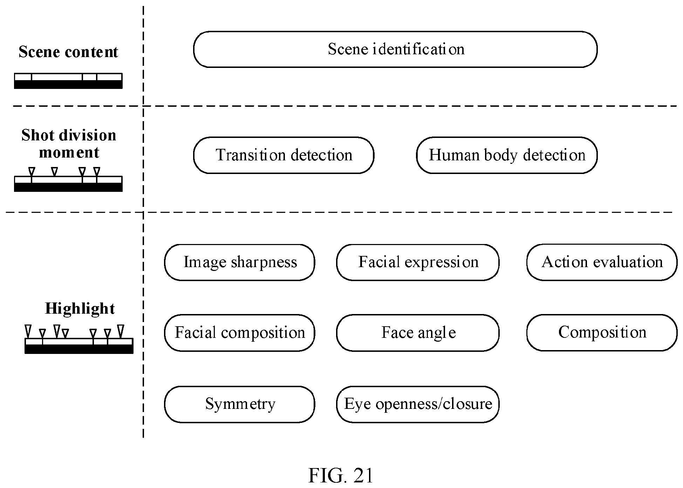

FIG. 21 is a schematic diagram of a relationship between scene identification, shot division moment detection, and highlight identification in an image capture method according to an embodiment of this application. As shown in FIG. 21, the image capture method includes three parts.
(1) Scene identification: An image feature is obtained. Through image feature analysis, scene content may be determined, and a current shooting scene may be identified.

For example, the shooting scene may be a people scene, a pet scene, a landscape scene, an action scene, or the like. It should be noted that classification of shooting scenes may be specifically determined based on an actual use requirement. This is not limited in embodiments of this application.

(2) Shot division moment detection: An execution occasion of auto capture is determined in a plurality of manners such as transition detection and human body detection.

For example, assuming that a current scene is a people scene, an electronic device continuously collects a plurality of frames of preview images, performs frame-by-frame image analysis and comparison to determine a local optimal frame in the people scene, and caches the local optimal frame. When the electronic device detects that the people scene is changed into a pet scene, the electronic device executes auto capture, to be specific, generates and outputs an auto capture photo based on the cached local optimal frame in the people scene.

For another example, assuming that a current scene is a people scene and a subject person is a person 1, an electronic device continuously collects a plurality of frames of preview images, performs frame-by-frame image analysis and comparison to determine a local optimal frame in the people scene, and caches the local optimal frame. When the electronic device detects that the subject person of the people scene is changed from the person 1 to a person 2, the electronic device performs auto capture, to be specific, generates and outputs an auto capture photo including the person 1 based on the cached local optimal frame in the people scene.

(3) Highlight identification: Image analysis is performed based on a preset image algorithm, to determine a picture of a highlight.

For example, as shown in FIG. 21, an influence factor of the image algorithm includes at least one of the following: image sharpness, a facial expression, an action evaluation, a facial composition, a face angle, an overall composition, symmetry, eye openness/closure, and the like. Each influence factor corresponds to one score value. A higher degree of influence indicates a larger score value. An electronic device may perform image analysis based on each influence factor in the image algorithm, calculate an image comprehensive score (also referred to as a highlights score), and determine a photo with a highest image comprehensive score as a highlight.

It should be noted that the influence factors of the image algorithm herein are examples for description. It may be understood that, during actual implementation, the influence factor of the image algorithm may alternatively be another possible case, for example, whether an image has shaking or whether an object in an image is centered.

In some embodiments, for different scenes, influence factors of used image algorithms are different.

For example, for a people scene, influence factors of an image algorithm may include image sharpness, a facial expression, a facial composition, a face angle, and eye openness/closure. For another example, for an action scene, influence factors of an image algorithm may include an action evaluation, image sharpness, a facial expression, a facial composition, and a face angle.

In some embodiments, for each type of scene, weighted calculation may be performed based on influence factors of an image algorithm, to obtain an image comprehensive score.

For example, for the people scene, weighting coefficients respectively corresponding to the image sharpness, the facial expression, the facial composition, the face angle, and the eye openness/closure are 0.2, 0.5, 0.1, 0.1, and 0.2. For another example, for the action scene, weighting coefficients respectively corresponding to the action evaluation, the image sharpness, the facial expression, the facial composition, and the face angle are 0.4, 0.2, 0.2, 0.1, and 0.1.

It should be noted that the foregoing lists weighting coefficient values by using examples. It may be understood that weighting coefficient values of different factors in different scenes may be specifically determined based on an actual use requirement. This is not limited in embodiments of this application.

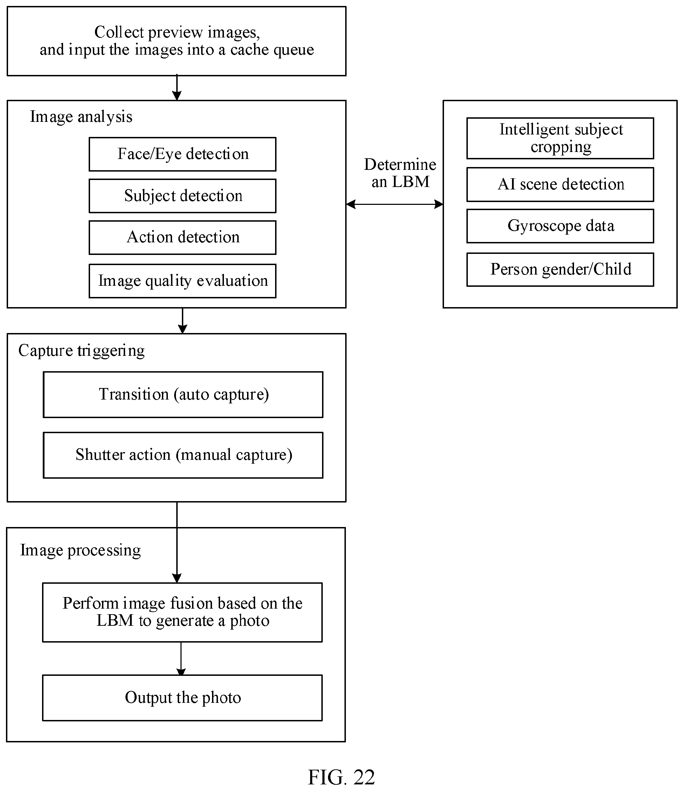

Based on the content shown in FIG. 21, FIG. 22 is a schematic flowchart of an image capture method according to an embodiment of this application. Collected preview images are input into a cache queue, and a local optimal frame LBM is determined through image analysis. Auto capture is triggered during a transition, or manual capture is triggered when that the user taps the shutter is received. Then, image processing is performed, to be specific, image fusion is performed based on the LBM, to generate and output a photo. It should be noted that, for auto capture, in a preview process, preview images are collected, frame-by-frame comparison is performed to select an optimal frame, and the optimal frame is cached. Once a scene change occurs, photographing is automatically triggered, to obtain an auto capture photo. For manual capture, after the user taps the image shooting button (the shutter), an optimal frame is selected from a plurality of image frames within 1s in a historical direction of photographing and within 0.5s in a future direction of photographing, and the optimal frame is used as a highlights capture photo.

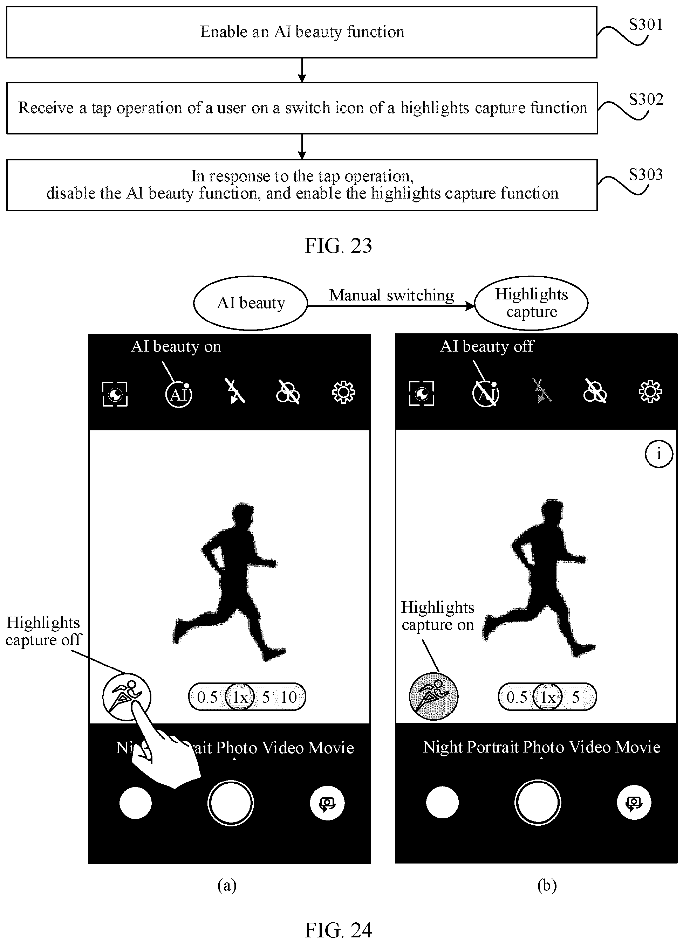

In some embodiments, the electronic device supports the user to manually trigger enabling of the "highlights capture" function. FIG. 23 is a schematic flowchart of enabling a highlights capture function by an electronic device.

S301: The electronic device enables an AI beauty function of a camera.

For example, after the camera is opened, an AI beauty state in a photo mode is entered by default. In the AI beauty state, a photo function bar displays a switch icon of the "highlights capture" function. In this case, the switch icon of the "highlights capture" function is in an off state.

S302: The electronic device receives a tap operation of a user on the switch icon of the highlights capture function.

S303: In response to the tap operation, the electronic device disables the AI beauty function, and enables the highlights capture function.

For example, as shown in (a) in FIG. 24, when the "AI beauty" function is enabled and the "highlights capture" function is disabled, the user may tap the switch icon of the "highlights capture" function, to trigger the electronic device to enable the "highlights capture" function. As shown in (b) in FIG. 24, in response to an operation of the user to tap the switch icon of the "highlights capture" function, the electronic device enables the "highlights capture" function and disables the "AI beauty" function. In this way, after the user triggers enabling of the "highlights capture" function, the electronic device switches from the AI beauty state to a highlights capture state.

In some other embodiments, when determining that a preset condition is met, the electronic device may further recommend the user to enable the "highlights capture" function. The preset condition includes: Brightness of a preview image is greater than a brightness threshold, there is a preset subject (for example, a person or an animal) in the preview image, and an action score of the preset subject is greater than an action score threshold.

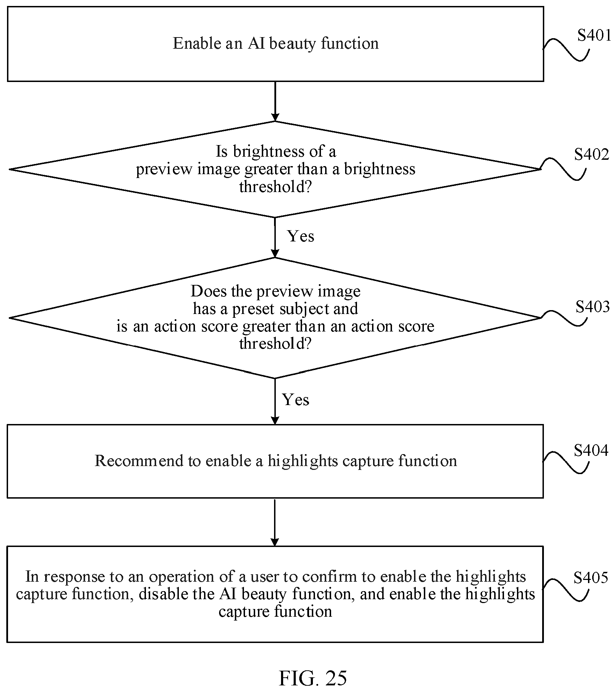

FIG. 25 is a flowchart of recommending to enable a highlights capture function by an electronic device when the electronic device is in an AI beauty state.

S401: The electronic device enables an AI beauty function of a camera.

When the AI beauty function is enabled, in other words, when the camera is in the AI beauty state, the electronic device collects a preview image, and determines brightness of the preview image.

S402: The electronic device determines whether the brightness of the preview image is greater than a brightness threshold.

If the brightness of the preview image is greater than the brightness threshold, it can be ensured that after a highlights capture state is entered, the electronic device can obtain good motion blur reduction effect and good image quality during capture, to ensure that a captured photo has good display effect. A value of the brightness threshold is specifically determined based on an actual use requirement. This is not limited in embodiments of this application.

If the brightness of the preview image is greater than the brightness threshold, the following S402 continues to be performed. If the brightness of the preview image is less than or equal to the brightness threshold, it indicates that brightness of a shooting environment is weak, and it is not recommended to use the highlights capture function. In this case, the AI beauty function continues to be maintained.

S403: The electronic device determines whether there is a preset subject in the preview image, and whether an action score of the preset subject is greater than an action score threshold.

For example, the preset subject may be a person, and the action score of the preset subject may be a score given when the person jumps upwards, runs, hurdles, shoots a basket, or shoots a goal.

For another example, the preset subject may be an animal such as a cat or a dog, and the action score of the preset subject may be a score given when the cat or the dog jumps upwards or runs.

In this embodiment of this application, based on a current preview sensing algorithm capability and a multiplexing algorithm, and to simplify a criterion premise as much as possible, a design solution provided in this application is as follows:

When a human body appears in the preview image, a human body area is greater than a human body area threshold, and an action score of the human body in the preview image is greater than the action score threshold, the electronic device recommends to enter the highlights capture state.

When a pet (a cat or a dog) appears in the preview image, a pet area is greater than a pet area threshold, and an action score of the pet in the preview image is greater than the action score threshold, the electronic device recommends to enter the highlights capture state.

If there is a preset subject in the preview image, and an action score of the preset subject is greater than the action score threshold, the electronic device continues to perform the following S404. If there is no preset subject in the preview image, or there is a preset subject in the preview image and an action score of the preset subject is less than or equal to the action score threshold, the electronic device continues to maintain the AI beauty function.

S404: The electronic device recommends to enable the highlights capture function.

S405: In response to an operation of a user to confirm to enable the highlights capture function, the electronic device disables the AI beauty function, and enables the highlights capture function.

When the camera is in the AI beauty state, if the preview image meets a preset condition, the electronic device recommends the user to use "highlights capture", and enters the highlights capture state after the user taps to confirm.

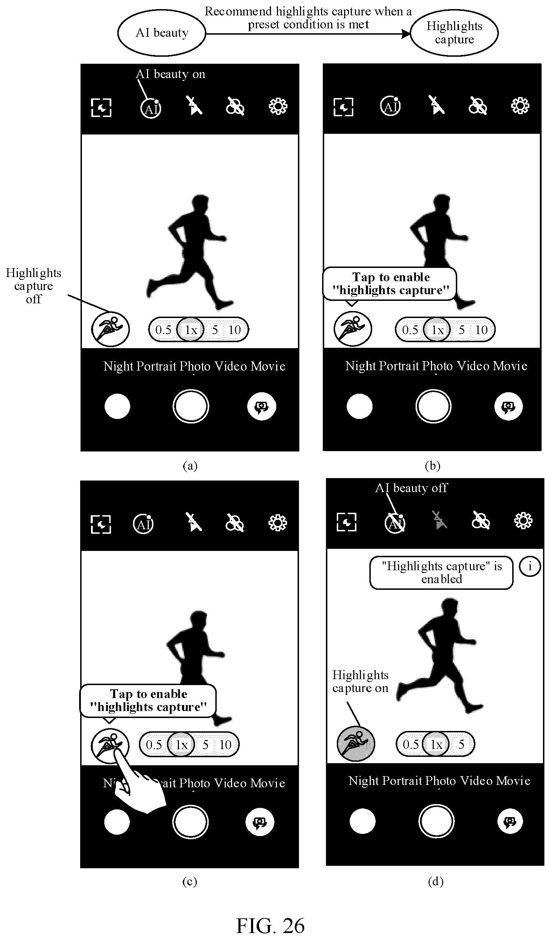

For example, as shown in (a) in FIG. 26, when the "AI beauty" function is enabled and the "highlights capture" function is disabled, the electronic device detects whether a preview image meets the preset condition. As shown in (b) in FIG. 26, when the electronic device detects that the preview image meets the preset condition, the electronic device pops up a prompt box near a switch icon of highlights capture, to recommend the user to enable the "highlights capture" function. As shown in (c) in FIG. 26, if the user confirms to enable the "highlights capture" function, the user may tap the switch icon of highlights capture. As shown in (d) in FIG. 26, when the electronic device receives a tap operation of the user, the electronic device enables the "highlights capture" function and disables the "AI beauty" function. In this way, the electronic device switches from the AI beauty state to the highlights capture state.

It should be noted that the prompt box can remain displayed for preset duration (for example, 5s). If no user operation is detected within the preset duration, the electronic device hides the prompt box.

In addition, to avoid jumping and a conflict, in a period of time (for example, 5s) after recommendation of highlights capture starts, highlights capture and AI beauty are mutually exclusive. In other words, after highlights capture is enabled, AI beauty is automatically disabled.

In some embodiments, if a focal length (for example, 10x) of a current scene exceeds a specific zoom range (for example, [0.5x, 5x]), the electronic device does not recommend "highlights capture".

It should be noted that, in embodiments of this application, "greater than" may be replaced with "greater than or equal to", and "less than or equal to" may be replaced with "less than". Alternatively, "greater than or equal to" may be replaced with "greater than", and "less than" may be replaced with "less than or equal to".

Each embodiment described in this specification may be an independent solution, or embodiments may be combined based on internal logic, and such solutions all fall within the protection scope of this application.

The foregoing mainly describes the solutions provided in embodiments of this application from a perspective of method steps. It may be understood that, to implement the foregoing functions, the electronic device implementing the method includes corresponding hardware structures and/or software modules for performing the functions. A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions. When the computer instructions are run on an electronic device, the electronic device is enabled to perform the foregoing related method steps to implement the image capture method in the foregoing embodiments.

An embodiment further provides a computer program product. A computer-readable storage medium stores program code. When the computer program product runs on a computer, the computer is enabled to perform the foregoing related steps to implement the image capture method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the image capture method in the foregoing method embodiments.

The electronic device, the computer-readable storage medium, the computer program product, or the chip provided in embodiments may be configured to perform the corresponding method provided above. Therefore, for beneficial effect that can be achieved, refer to the beneficial effect of the corresponding method provided above. Details are not described herein again.

In several embodiments provided in this application, it should be understood that the disclosed apparatuses and methods may be implemented in other manners. For example, the described apparatus embodiments are merely examples. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image capture method, comprising:
displaying (S101) a preview interface of a photo mode of a camera (193) in the photo mode, wherein a first icon is displayed in the preview interface, and the first icon is in a first state;
in response to an operation of a user on the first icon, enabling a first function, and switching the first icon from the first state to a second state (S102), the first state is an unselected state, and the second state is a selected state; and
performing the following steps in response to an operation of the user on an image shooting button (10) at a first moment:
determining (S103) a first image in a plurality of frames (22-24) of images in a first time period before the first moment and a plurality of frames (22-24) of images in a second time period after the first moment , wherein the first image is an image with a highest comprehensive score among the plurality of frames (22-24) of images in the first time period before the first moment and the plurality of frames (22-24) of images in the second time period after the first moment; and the comprehensive score comprises an image quality score, a portrait score, and an action score;
generating (S104) a first photo based on the first image;
saving (S105) the first photo into a gallery;
wherein the photo mode further comprises a second function, a switch button of the second function is displayed on a setting interface of the photo mode, and the switch button of the second function is set to an off state by default; and when the switch button of the second function is in the off state, the second function is in a disabled state; and
when the second function is enabled, continuously collecting preview images to obtain a second preview image frame stream (S201);
identifying (S202), based on the second preview image frame stream, that a current shooting scene is a first scene;
performing (S203) frame-by-frame comparison on each frame of preview image in the second preview image frame stream, to determine a fourth image with a highest comprehensive score;
when identifying (S204), based on the second preview image frame stream, that the current shooting scene changes to a second scene, generating a second photo based on the fourth image; and
saving (S205) the second photo into the gallery.

2. The method according to claim 1, wherein after the enabling a first function, the method further comprises:
continuously collecting preview images to obtain a first preview image frame stream; and
determining a local optimal image for every M frames of preview images in the first preview image frame stream, and sequentially inputting each determined local optimal image into a first cache queue, wherein the local optimal image is an image with a highest comprehensive score in the M frames of preview images, wherein
the first cache queue is a first-in first-out queue, the first cache queue caches S frames of recently determined local optimal images and N frames of recently collected images, and N is less than or equal to M; and
a total quantity of frames (22-24) of the plurality of frames (22-24) of images in the first time period is S×M+N.

3. The method according to claim 2, wherein before determining the first image with the highest comprehensive score, the method further comprises:
determining a second image with a highest comprehensive score in the S frames of local optimal images and the N frames of images; and
fixing the second image in the first cache queue.

4. The method according to claim 3, wherein before determining the first image with the highest comprehensive score, the method further comprises:
continuously collecting T frames of preview images in the second time period after the first moment; and
sequentially inputting the T frames of preview images into the first cache queue, wherein images other than the second image in the first cache queue are replaced with the T frames of preview images, wherein
a total quantity of frames (22-24) of the plurality of frames (22-24) of images in the second time period is T.

5. The method according to any one of claims 1 to 4, wherein the generating a first photo based on the first image comprises:
fusing the first image and a third image to obtain the first photo, wherein
the third image comprises at least one image collected immediately after the first image, and/or at least one image collected immediately before the first image.

6. The method according to any one of claims 1 to 5, wherein the first time period is 1 second or less than 1 second, and the second time period is 0.5 seconds.

7. The method according to any one of claims 1 to 6, wherein the method further comprises:
when the first icon is in the second state, receiving an operation of the user on the first icon; and
disabling the first function in response to the operation of the user on the first icon, and switching the first icon from the second state to the first state.

8. The method according to claim 1, wherein the generating a second photo based on the fourth image comprises:
fusing the fourth image and a fifth image to obtain the second photo, wherein
the fifth image comprises at least one image collected immediately after the fourth image, and/or at least one image collected immediately before the fourth image.

9. The method according to any one of claims 1, 7 and 8, wherein the method further comprises:
when the first icon is in the first state, receiving an operation of the user on the first icon;
displaying first information in a pop-up box in response to the operation of the user on the first icon, wherein the first information is used to prompt whether to enable the second function; and
in response to an operation of the user to confirm to enable the second function, enabling both the first function and the second function, switching the first icon from the first state to the second state, and switching the switch button of the second function from the off state to an on state.

10. The method according to any one of claims 1, 8 and 9, wherein the method further comprises:
enabling or disabling the second function in response to an operation of the user in a photo setting interface:
wherein when the second function is enabled, the method further comprises:
prohibiting the second function if the first function is disabled; and
removing prohibition on the second function if the first function is enabled again.

11. The method according to any one of claims 1 and 8 to 10, wherein the method further comprises:
when both the first function and the second function are enabled, skipping executing the second function during execution of the first function, wherein an execution priority of the first function is higher than an execution priority of the second function.

12. An electronic device (100), comprising a camera (193), a display (194), a processor (110), a memory (120, 121), and a
computer program stored in the memory (120, 121), wherein the processor (110) is configured to execute the computer program, so that the electronic device (100) is enabled to implement the method according to any one of claims 1 to 11.

13. A computer-readable storage medium, wherein the computer-readable storage medium stores a computer program; and when the computer program is run on an electronic device (100) according to claim 12, the electronic device (100) is enabled to perform the method according to any one of claims 1 to 11.

## Patentansprüche

1. Ein Bilderfassungsverfahren, umfassend:
Anzeigen (S101) einer Vorschau-Schnittstelle eines Fotomodus einer Kamera (193) im Fotomodus, wobei ein erstes Symbol in der Vorschau-Schnittstelle angezeigt wird und das erste Symbol in einem ersten Zustand ist;
als Reaktion auf eine Bedienung des ersten Symbols durch einen Benutzer, Aktivieren einer ersten Funktion und Umschalten des ersten Symbols vom ersten Zustand in einen zweiten Zustand (S102), wobei der erste Zustand ein nicht ausgewählter Zustand ist und der zweite Zustand ein ausgewählter Zustand ist; und
Durchführen der folgenden Schritte als Reaktion auf eine Betätigung einer Bildaufnahmetaste (10) durch den Benutzer zu einem ersten Zeitpunkt:
Bestimmen (S103) eines ersten Bildes aus einer Vielzahl von Einzelbildern (22-24) in einem ersten Zeitraum vor dem ersten Zeitpunkt und einer Vielzahl von Einzelbildern (22-24) in einem zweiten Zeitraum nach dem ersten Zeitpunkt, wobei das erste Bild ein Bild mit der höchsten Gesamtpunktzahl unter der Vielzahl von Einzelbildern (22-24) im ersten Zeitraum vor dem ersten Zeitpunkt und der Vielzahl von Einzelbildern (22-24) im zweiten Zeitraum nach dem ersten Zeitpunkt ist; und wobei die Gesamtpunktzahl eine Bildqualitätsbewertung, eine Porträtbewertung und eine Aktionsbewertung umfasst;
Erzeugen (S104) eines ersten Fotos basierend auf dem ersten Bild;
Speichern (S105) des ersten Fotos in einer Galerie;
wobei der Fotomodus ferner eine zweite Funktion umfasst, eine Umschalttaste der zweiten Funktion auf einer Einstellungsschnittstelle des Fotomodus angezeigt wird und die Umschalttaste der zweiten Funktion standardmäßig auf einen Aus-Zustand gesetzt ist; und wenn die Umschalttaste der zweiten Funktion im Aus-Zustand ist, sich die zweite Funktion in einem deaktivierten Zustand befindet; und
wenn die zweite Funktion aktiviert ist, kontinuierliches Erfassen von Vorschaubildern, um einen zweiten Vorschaubild-Stream (S201) zu erhalten;
Identifizieren (S202), basierend auf dem zweiten Vorschaubild-Stream, dass eine aktuelle Aufnahmeszene eine erste Szene ist;
Durchführen (S203) eines bildweisen Vergleichs jedes Vorschaubild-Einzelbildes im zweiten Vorschaubild-Stream, um ein viertes Bild mit der höchsten Gesamtpunktzahl zu bestimmen;
beim Identifizieren (S204), basierend auf dem zweiten Vorschaubild-Stream, dass sich die aktuelle Aufnahmeszene zu einer zweiten Szene ändert, Erzeugen eines zweiten Fotos basierend auf dem vierten Bild; und
Speichern (S205) des zweiten Fotos in der Galerie.

2. Verfahren nach Anspruch 1, wobei nach dem Aktivieren einer ersten Funktion das Verfahren ferner umfasst:
kontinuierliches Erfassen von Vorschaubildern, um einen ersten Vorschaubild-Stream zu erhalten; und
Bestimmung eines lokal optimalen Bildes für jeweils M Einzelbilder der Vorschaubilder im ersten Vorschaubild-Frame-Stream und sequentielles Eingeben jedes bestimmten lokal optimalen Bildes in eine erste Cache-Warteschlange, wobei das lokal optimale Bild ein Bild mit einer höchsten Gesamtpunktzahl in den M Vorschaubildern ist, wobei
die erste Cache-Warteschlange eine First-In-First-Out-Warteschlange ist, die erste Cache-Warteschlange S Einzelbilder der kürzlich bestimmten lokal optimalen Bilder und N Einzelbilder der kürzlich gesammelten Bilder zwischenspeichert und N kleiner oder gleich M ist; und
eine Gesamtzahl an Einzelbildern (22-24) der mehreren Einzelbilder (22-24) von Bildern im ersten Zeitintervall S×M+N beträgt.

3. Verfahren nach Anspruch 2, wobei das Verfahren vor der Bestimmung des ersten Bildes mit der höchsten Gesamtpunktzahl ferner umfasst:
Bestimmung eines zweiten Bildes mit einer höchsten Gesamtpunktzahl in den S Einzelbildern der lokal optimalen Bilder und den N Einzelbildern der Bilder; und
Fixieren des zweiten Bildes in der ersten Cache-Warteschlange.

4. Verfahren nach Anspruch 3, wobei das Verfahren vor der Bestimmung des ersten Bildes mit der höchsten Gesamtpunktzahl ferner umfasst:
kontinuierliches Sammeln von T Einzelbildern von Vorschaubildern im zweiten Zeitintervall nach dem ersten Moment; und
sequentielles Eingeben der T Einzelbilder von Vorschaubildern in die erste Cache-Warteschlange, wobei Bilder außer dem zweiten Bild in der ersten Cache-Warteschlange durch die T Einzelbilder von Vorschaubildern ersetzt werden, wobei
eine Gesamtzahl an Einzelbildern (22-24) der mehreren Einzelbilder (22-24) von Bildern im zweiten Zeitintervall T beträgt.

5. Verfahren nach einem der Ansprüche 1 bis 4, wobei das Erzeugen eines ersten Fotos basierend auf dem ersten Bild umfasst:
Verschmelzen des ersten Bildes und eines dritten Bildes, um das erste Foto zu erhalten, wobei
das dritte Bild mindestens ein unmittelbar nach dem ersten Bild gesammeltes Bild und/oder mindestens ein unmittelbar vor dem ersten Bild gesammeltes Bild umfasst.

6. Verfahren nach einem der Ansprüche 1 bis 5, wobei das erste Zeitintervall 1 Sekunde oder weniger als 1 Sekunde beträgt und das zweite Zeitintervall 0,5 Sekunden beträgt.

7. Verfahren nach einem der Ansprüche 1 bis 6, wobei das Verfahren ferner umfasst:
wenn das erste Symbol im zweiten Zustand ist, Empfangen einer Bedienung des Benutzers auf dem ersten Symbol; und
Deaktivieren der ersten Funktion als Reaktion auf die Bedienung des Benutzers auf dem ersten Symbol und Umschalten des ersten Symbols vom zweiten Zustand in den ersten Zustand.

8. Verfahren nach Anspruch 1, wobei das Erzeugen eines zweiten Fotos basierend auf dem vierten Bild Folgendes umfasst:
Verschmelzen des vierten Bildes und eines fünften Bildes, um das zweite Foto zu erhalten, wobei
das fünfte Bild mindestens ein Bild umfasst, das unmittelbar nach dem vierten Bild aufgenommen wurde, und/oder mindestens ein Bild, das unmittelbar vor dem vierten Bild aufgenommen wurde.

9. Verfahren nach einem der Ansprüche 1, 7 und 8, wobei das Verfahren ferner Folgendes umfasst:
wenn sich das erste Symbol im ersten Zustand befindet, Empfangen einer Bedienung des Benutzers auf dem ersten Symbol;
Anzeigen erster Informationen in einem Pop-up-Fenster als Reaktion auf die Bedienung des Benutzers auf dem ersten Symbol, wobei die ersten Informationen dazu dienen, abzufragen, ob die zweite Funktion aktiviert werden soll; und
als Reaktion auf eine Bedienung des Benutzers zur Bestätigung der Aktivierung der zweiten Funktion, Aktivieren sowohl der ersten Funktion als auch der zweiten Funktion, Umschalten des ersten Symbols vom ersten Zustand in den zweiten Zustand und Umschalten der Umschalttaste der zweiten Funktion vom ausgeschalteten Zustand in einen eingeschalteten Zustand.

10. Verfahren nach einem der Ansprüche 1, 8 und 9, wobei das Verfahren ferner Folgendes umfasst:
Aktivieren oder Deaktivieren der zweiten Funktion als Reaktion auf eine Bedienung des Benutzers in einer Fotoeinstellungsschnittstelle:
wobei, wenn die zweite Funktion aktiviert ist, das Verfahren ferner Folgendes umfasst:
Sperren der zweiten Funktion, wenn die erste Funktion deaktiviert ist; und
Aufheben der Sperre für die zweite Funktion, wenn die erste Funktion erneut aktiviert wird.

11. Verfahren nach einem der Ansprüche 1 und 8 bis 10, wobei das Verfahren ferner Folgendes umfasst:
wenn sowohl die erste Funktion als auch die zweite Funktion aktiviert sind, Überspringen der Ausführung der zweiten Funktion während der Ausführung der ersten Funktion, wobei eine Ausführungspriorität der ersten Funktion höher ist als eine Ausführungspriorität der zweiten Funktion.

12. Elektronisches Gerät (100), umfassend eine Kamera (193), ein Display (194), einen Prozessor (110), einen Speicher (120, 121) und ein im Speicher (120, 121) gespeichertes Computerprogramm, wobei der Prozessor (110) dazu konfiguriert ist, das Computerprogramm auszuführen, sodass das elektronische Gerät (100) in die Lage versetzt wird, das Verfahren nach einem der Ansprüche 1 bis 11 zu implementieren.

13. Computerlesbares Speichermedium, wobei das computerlesbare Speichermedium ein Computerprogramm speichert; und wenn das Computerprogramm auf einem elektronischen Gerät (100) nach Anspruch 12 ausgeführt wird, ist das elektronische Gerät (100) dazu befähigt, das Verfahren nach einem der Ansprüche 1 bis 11 durchzuführen.

## Revendications

1. Un procédé de capture d'image, comprenant :
l'affichage (S101) d'une interface de prévisualisation d'un mode photo d'une caméra (193) dans le mode photo, dans lequel une première icône est affichée dans l'interface de prévisualisation, et la première icône est dans un premier état ;
en réponse à une opération d'un utilisateur sur la première icône, l'activation d'une première fonction, et le passage de la première icône du premier état à un second état (S102), le premier état est un état non sélectionné, et le second état est un état sélectionné ; et
l'exécution des étapes suivantes en réponse à une opération de l'utilisateur sur un bouton de prise de vue (10) à un premier moment :
la détermination (S103) d'une première image parmi une pluralité de trames (22-24) d'images dans une première période de temps avant le premier moment et une pluralité de trames (22-24) d'images dans une seconde période de temps après le premier moment, dans lequel la première image est une image ayant un score global le plus élevé parmi la pluralité de trames (22-24) d'images dans la première période de temps avant le premier moment et la pluralité de trames (22-24) d'images dans la seconde période de temps après le premier moment ; et le score global comprend un score de qualité d'image, un score de portrait et un score d'action ;
la génération (S104) d'une première photo basée sur la première image ;
l'enregistrement (S105) de la première photo dans une galerie ;
dans lequel le mode photo comprend en outre une seconde fonction, un bouton de commutation de la seconde fonction est affiché sur une interface de réglage du mode photo, et le bouton de commutation de la seconde fonction est réglé sur un état désactivé par défaut ; et lorsque le bouton de commutation de la seconde fonction est dans l'état désactivé, la seconde fonction est dans un état inactif ; et
lorsque la seconde fonction est activée, la collecte en continu d'images de prévisualisation pour obtenir un second flux de trames d'images de prévisualisation (S201) ;
l'identification (S202), sur la base du second flux de trames d'images de prévisualisation, qu'une scène de prise de vue actuelle est une première scène ;
l'exécution (S203) d'une comparaison image par image sur chaque trame d'image de prévisualisation dans le second flux de trames d'images de prévisualisation, pour déterminer une quatrième image avec un score global le plus élevé ;
lors de l'identification (S204), sur la base du second flux de trames d'images de prévisualisation, que la scène de prise de vue actuelle change pour une seconde scène, la génération d'une seconde photo basée sur la quatrième image ; et
l'enregistrement (S205) de la seconde photo dans la galerie.

2. Le procédé selon la revendication 1, dans lequel après l'activation d'une première fonction, le procédé comprend en outre :
la collecte en continu d'images de prévisualisation pour obtenir un premier flux de trames d'images de prévisualisation ; et
déterminer une image optimale locale pour chaque M trames d'images de prévisualisation dans le premier flux de trames d'images de prévisualisation, et entrer séquentiellement chaque image optimale locale déterminée dans une première file d'attente de cache, dans laquelle l'image optimale locale est une image ayant un score global le plus élevé parmi les M trames d'images de prévisualisation, dans laquelle
la première file d'attente de cache est une file d'attente premier entré, premier sorti, la première file d'attente de cache met en cache S trames d'images optimales locales récemment déterminées et N trames d'images récemment collectées, et N est inférieur ou égal à M ; et
une quantité totale de trames (22-24) de la pluralité de trames (22-24) d'images dans la première période de temps est S×M+N.

3. Procédé selon la revendication 2, dans lequel avant de déterminer la première image avec le score global le plus élevé, le procédé comprend en outre :
déterminer une deuxième image avec un score global le plus élevé parmi les S trames d'images optimales locales et les N trames d'images ; et
fixer la deuxième image dans la première file d'attente de cache.

4. Procédé selon la revendication 3, dans lequel avant de déterminer la première image avec le score global le plus élevé, le procédé comprend en outre :
collecter en continu T trames d'images de prévisualisation dans la deuxième période de temps après le premier moment ; et
entrer séquentiellement les T trames d'images de prévisualisation dans la première file d'attente de cache, dans laquelle les images autres que la deuxième image dans la première file d'attente de cache sont remplacées par les T trames d'images de prévisualisation, dans laquelle
une quantité totale de trames (22-24) de la pluralité de trames (22-24) d'images dans la deuxième période de temps est T.

5. Procédé selon l'une quelconque des revendications 1 à 4, dans lequel la génération d'une première photo basée sur la première image comprend :
fusionner la première image et une troisième image pour obtenir la première photo, dans laquelle
la troisième image comprend au moins une image collectée immédiatement après la première image, et/ou au moins une image collectée immédiatement avant la première image.

6. Procédé selon l'une quelconque des revendications 1 à 5, dans lequel la première période de temps est de 1 seconde ou moins de 1 seconde, et la deuxième période de temps est de 0,5 seconde.

7. Procédé selon l'une quelconque des revendications 1 à 6, dans lequel le procédé comprend en outre :
lorsque la première icône est dans le deuxième état, recevoir une opération de l'utilisateur sur la première icône ; et
désactiver la première fonction en réponse à l'opération de l'utilisateur sur la première icône, et commuter la première icône du deuxième état au premier état.

8. Procédé selon la revendication 1, dans lequel la génération d'une seconde photo sur la base de la quatrième image comprend :
la fusion de la quatrième image et d'une cinquième image pour obtenir la seconde photo, dans lequel
la cinquième image comprend au moins une image collectée immédiatement après la quatrième image, et/ou au moins une image collectée immédiatement avant la quatrième image.

9. Procédé selon l'une quelconque des revendications 1, 7 et 8, dans lequel le procédé comprend en outre :
lorsque la première icône est dans le premier état, la réception d'une opération de l'utilisateur sur la première icône ;
l'affichage d'une première information dans une boîte contextuelle en réponse à l'opération de l'utilisateur sur la première icône, dans lequel la première information est utilisée pour demander s'il faut activer la seconde fonction ; et
en réponse à une opération de l'utilisateur pour confirmer l'activation de la seconde fonction, l'activation à la fois de la première fonction et de la seconde fonction, le basculement de la première icône du premier état vers le second état, et le basculement du bouton de commutation de la seconde fonction d'un état désactivé vers un état activé.

10. Procédé selon l'une quelconque des revendications 1, 8 et 9, dans lequel le procédé comprend en outre :
l'activation ou la désactivation de la seconde fonction en réponse à une opération de l'utilisateur dans une interface de réglage photo :
dans lequel lorsque la seconde fonction est activée, le procédé comprend en outre :
l'interdiction de la seconde fonction si la première fonction est désactivée ; et
la suppression de l'interdiction sur la seconde fonction si la première fonction est réactivée.

11. Procédé selon l'une quelconque des revendications 1 et 8 à 10, dans lequel le procédé comprend en outre :
lorsque la première fonction et la seconde fonction sont toutes deux activées, le saut de l'exécution de la seconde fonction pendant l'exécution de la première fonction, dans lequel une priorité d'exécution de la première fonction est supérieure à une priorité d'exécution de la seconde fonction.

12. Dispositif électronique (100), comprenant une caméra (193), un écran (194), un processeur (110), une mémoire (120, 121), et un programme informatique stocké dans la mémoire (120, 121), dans lequel le processeur (110) est configuré pour exécuter le programme informatique, de sorte que le dispositif électronique (100) est activé pour mettre en œuvre le procédé selon l'une quelconque des revendications 1 à 11.

13. Support de stockage lisible par ordinateur, dans lequel le support de stockage lisible par ordinateur stocke un programme informatique ; et lorsque le programme informatique est exécuté sur un dispositif électronique (100) selon la revendication 12, le dispositif électronique (100) est activé pour réaliser le procédé selon l'une quelconque des revendications 1 à 11.
